# EUROPEAN PATENT APPLICATION

(11) **EP 0 345 356 A1**
(43) Date of publication of application: **13.12.1989**
(21) Application number: 88909832.3
(22) Date of filing: 11.11.1988
(51) Int. Cl.: C07F 15/00, C07C 87/34, A61K 31/28

(54) **PLATINUM COMPLEX AND THERAPEUTIC AGENT FOR MALIGNANT TUMOR**

(30) Priority: 11.11.1987 JP 284968/87; 19.11.1987 JP 292493/87; 01.12.1987 JP 305194/87; 14.12.1987 JP 316448/87; 18.12.1987 JP 322299/87; 21.12.1987 JP 324994/87; 22.12.1987 JP 326497/87; 25.04.1988 JP 101938/88; 30.04.1988 JP 108528/88; 05.08.1988 JP 196777/88; 02.09.1988 JP 220616/88
(71) Applicant: TORAY INDUSTRIES, INC., Tokyo 103 (JP)
(72) Inventor: MUTOH, Masato, Kamakura-shi Kanagawa 280 (JP); FUJIKAWA, Kazuhiro, Minami-ku Nagoya-shi Aichi 457 (JP); IMAMURA, Shinzo 2-1, Toray Matsuzono Shataku, Nagoya-shi Aichi 467 (JP); MATSUNAGA, Keiichi, Okazaki-shi Aichi 444 (JP); OKAMOTO, Yutaka, Ohtsu-shi Shiga 520 (JP); HANADA, Satoshi, Ohtsu-shi Shiga 520 (JP); SUGAWARA, Yoshinori Toray Shiga Hokuen Ryo, Shiga 520 (JP); SAWAHATA, Tadashi, Shiga 520 (JP); HASHIMOTO, Hideyuki, Ohtsu-shi Shiga 520 (JP)
(74) Representative: Kador & Partner
(86) International application number: JP8801137
(87) International publication number: WO8904318

(57) **Abstract**

A platinum (II) complex represented by general formula (I), wherein A and B are each a ligand represented by formulae (II) to (XV) or an OH ligand described in the specification, provided that at least one of A and B are selected from among the ligands represented by formulae (II) to (XV). This platinum complex has an antitumor activity and is less toxic. which renders the platinum complex useful as a therapeutic agent for malignant tumor.

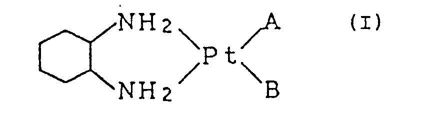

## Description

### Technical Field

This invention relates to a novel platinum complex and a malignant tumor therapeutic agent containing said complex as an effective component.

### Background Art

A significant progress has recently been developed in a field of chemotheraphy for malignant tumors by administering cis-diamminedichloro platinum(II), hereinafter referred to as CDDP. This progress is due to the remarkable remedial efficacy of CDDP against cancers of genital organs such as an ovarian cancer and testicular cancer which are difficult to remedy with conventional chemotherapeutic agents. CDDP, however, causes serious adverse reactions such as nephro- and myelotoxicities which provide a serious problem in its clinical use.

On the other hand, extensive studies have been made to improve, especially, nephrotoxicity, which is a dose limiting factor (DLF), and have resulted in a development of new platinum complexes of the second generation, for instance, cis-diammine-1,1-cyclobutanedicarboxylate platinum(II), hereinafter abbreviated as CBDCA, cis- diammine-O,O'-glycolate platinum(II), etc. (Japanese Patent Application Laid-Open (Kokai) No. 56-154493, etc.).

These prior compounds certainly show a weak nephrotoxicity, but are not so high in an antitumor activity as CDDP. Therefore, it has been still desired to develop a platinum complex having a potent antitumor activity and as well as a weak toxicity.

### Disclosure of the Invention

The objects of the present invention are to provide novel platinum(II) complexes satisfying both requirements of the potent antitumor activity and the weak toxicity, and further to provide a pharmaceutical agent for treating a malignant tumor that meets said two requirements.

Theses and other objects of the present invention will become apparent from the following detailed description of the invention.

These objects are achieved by a platinum(II) complex expressed by the formula (I) below and a malignant tumor treatment agent and a malignant tumor treatment agent composition having such complex as an effective component. 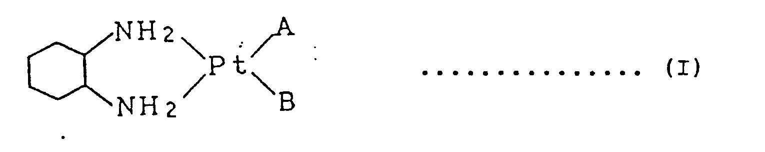 (In the formula, the configuration of 1,2-diaminocyclohexane is cis-, trans-k- or trans-d-, and A and B represent respectively a ligand or OH ligand expressed by any of the following formulas (II) through (XV), and at least one of A and B is chosen from the ligands expressed by the formulas (II) through (XV)). 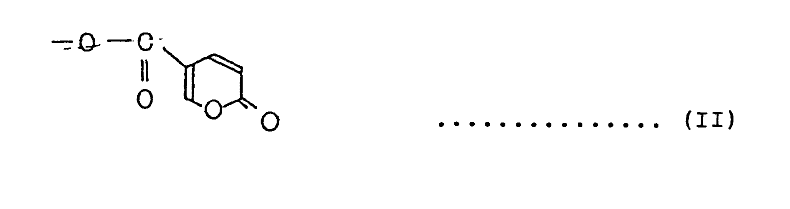 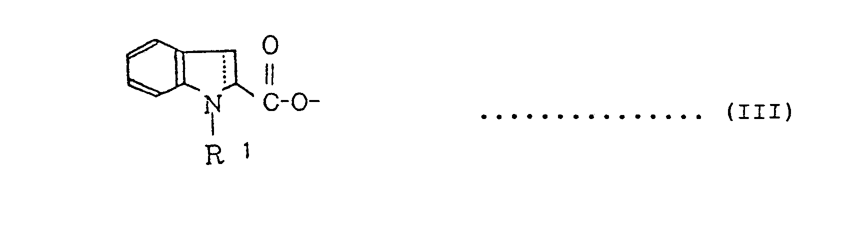 (In formula (III), R¹ represents a hydrogen atom or an acyl group, and the dotted line shows that the bond may be single or double.) 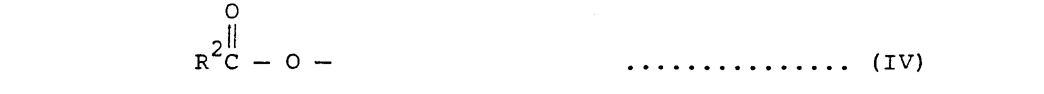 (In formula (IV), R² represents a 2-furyl or 2-tetrahydrofuryl group.) 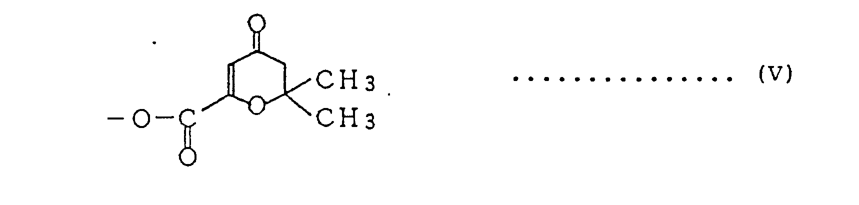 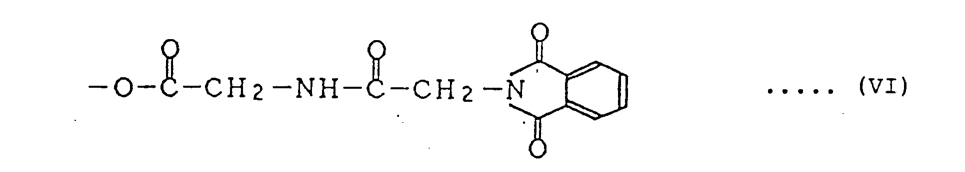 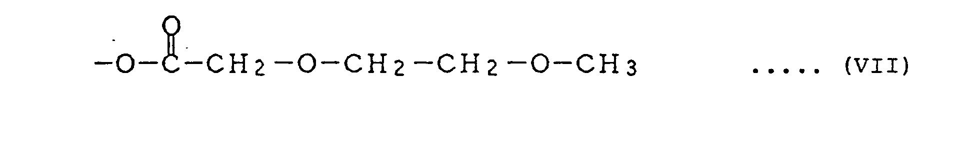 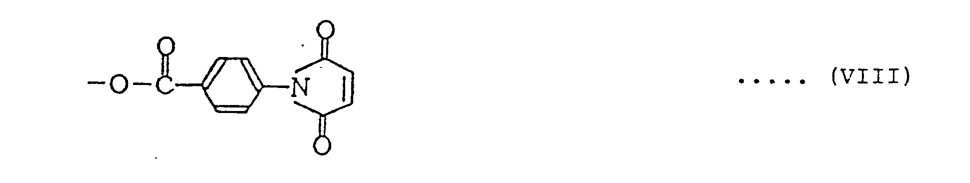 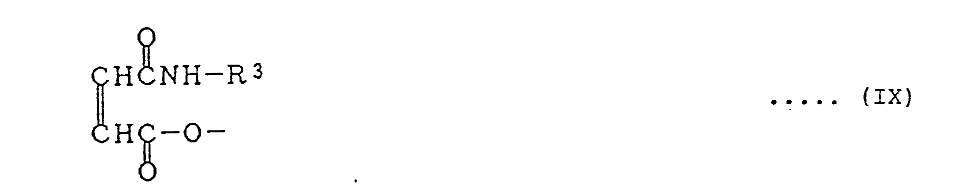 (In formula (XI), R represents -CH₂CO₂R⁴, 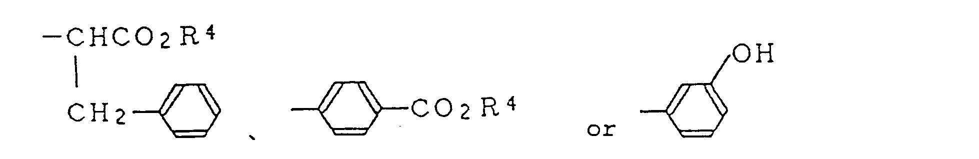 R⁴ representing an alkyl group of 1-4 carbon atoms.) 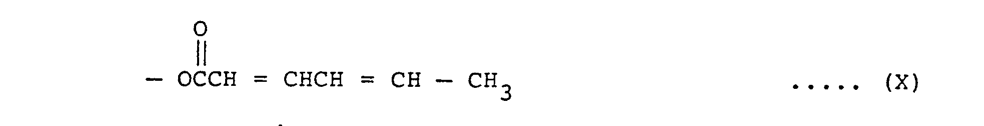 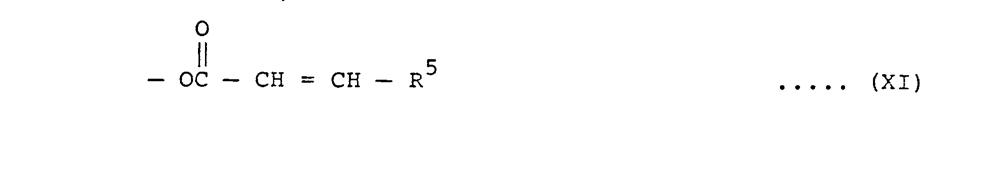 (In formula (XI); R⁵ represents

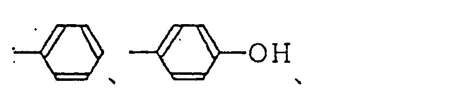

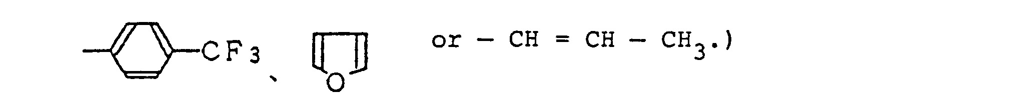

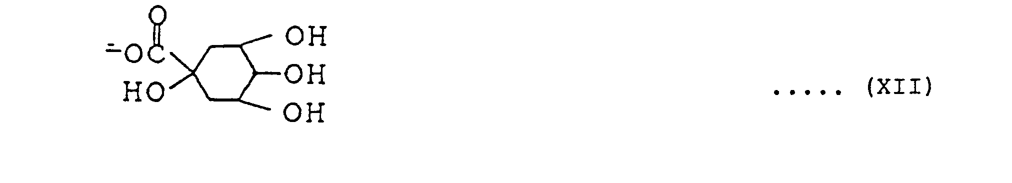

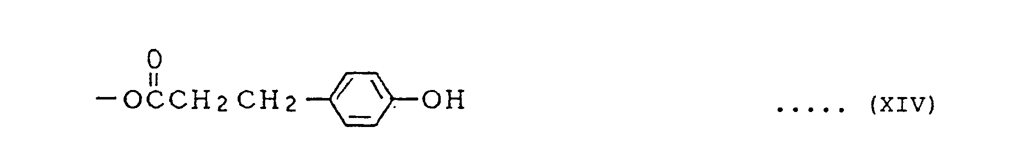

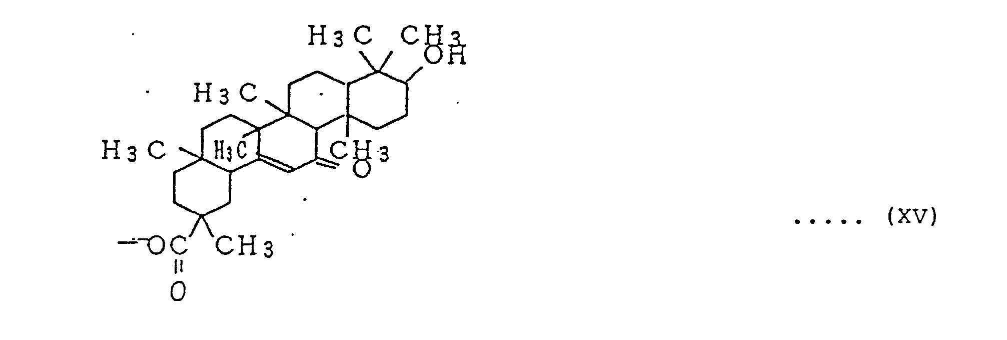

### Best Mode for Carrying the Invention

The configuration of the present invention will now be described in the following.

The platinum complex of the present invention expressed by the foregoing formula (I) can be synthesized by reacting dinitrato(1,2-diaminocyclohexane)platinum(II), sulfato(1,2-diaminocyclohexane)platinum(II), dichloro-(1,2-diaminocyclohexane)platinum(II) or dihydroxo(1,2-diaminocyclohexane)platinum(II) with any of the compounds shown by the following formulas (XXII) through (XXXV). 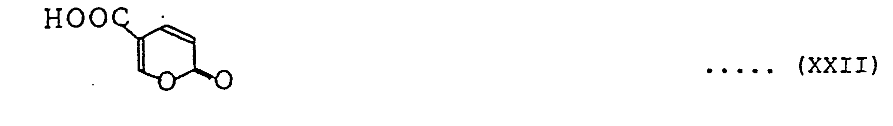 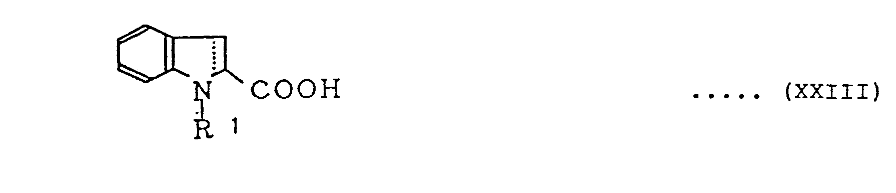 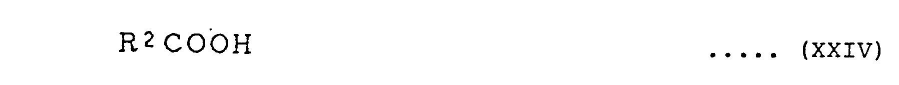 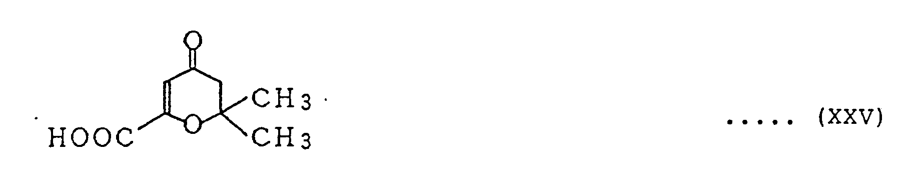 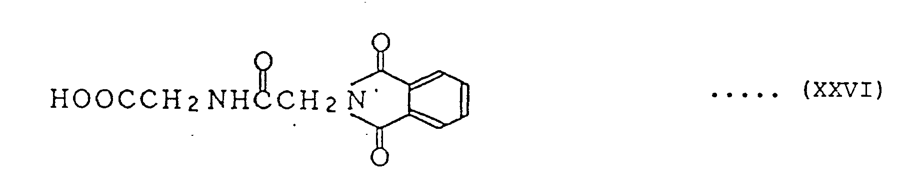 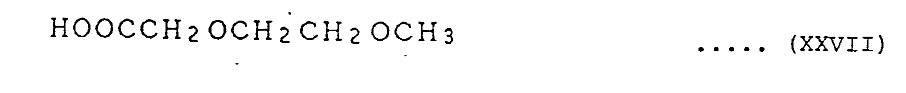 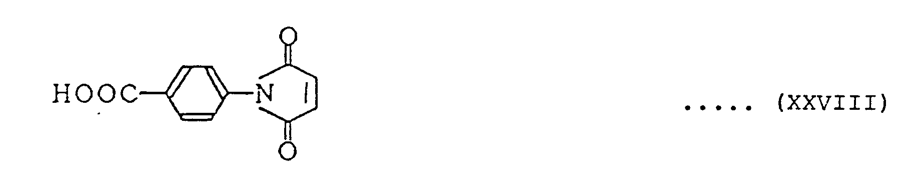 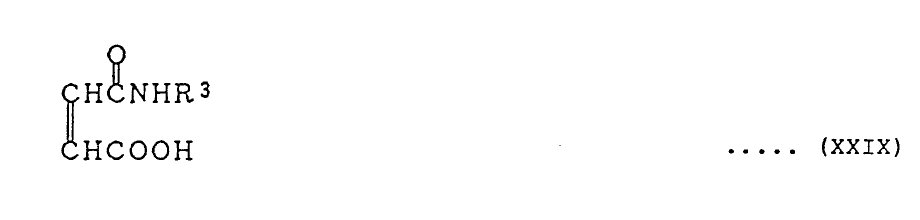 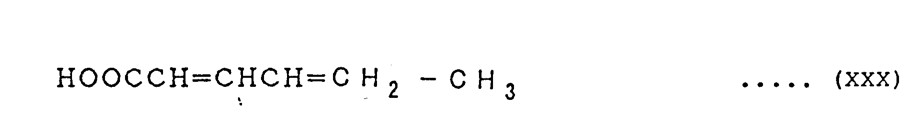 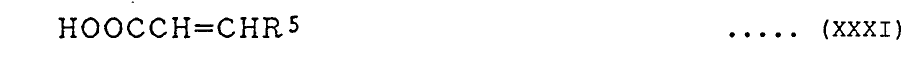 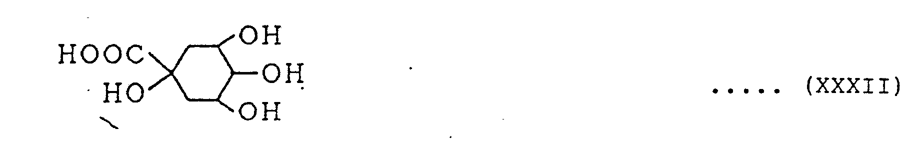 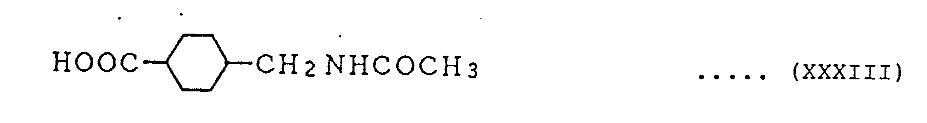 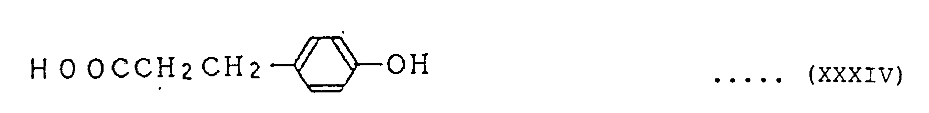 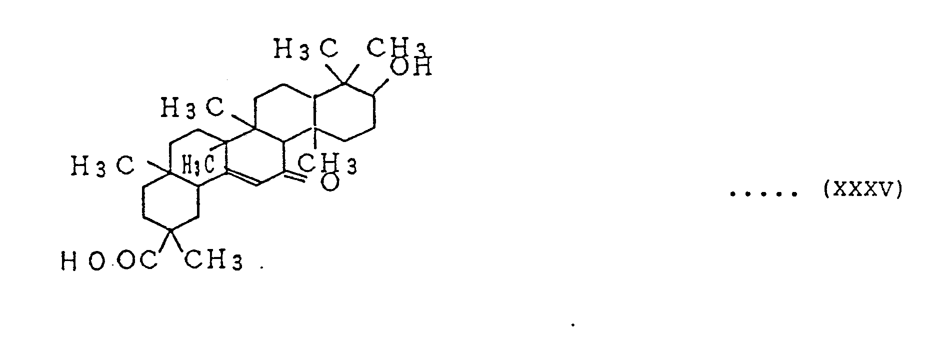 (In the foregoing formulas (XXII) through (XXXV), R¹, R², _{R}³, _{R}⁴ and _{R}⁵ represents those shown in formulas (II) through (XV) respectively.)

Here, the compounds used as a material, viz. dinitrato(1,2-diaminocyclohexane)platinum(II), sulfato-(1,2-diaminocyclohexane)platinum(II), dichloro(1,2-diaminocyclohexane)platinum(II) and dihydroxo(1,2-diaminocyclohexane)platinum(II) have respectively three isomers depending on the configuration of 1,2-diaminocyclohexane (abbreviated as "dach" in the following) used as a starting material, that is, Pt(trans-ℓ-dach)(ONO₂)₂, Pt(trans-d-dach)(ONO₂)₂ and Pt(cis-dach)(ONO₂)₂; Pt(trans- ℓ-dach) (SO₄) , Pt(trans-d-dach)(SO₄) and Pt(cis-dach)(SO₄) ; Pt(trans-ℓ-dach)Cℓ₂, Pt(trans-d-dach)Cℓ₂ and Pt(cis- dach)Cℓ₂; and Pt(trans-k-dach)(OH)ℓ₂, Pt(trans-d-dach)(OH)2 and Pt(cis-dach)(OH)₂ .

The material compounds, dinitrato(1,2-diaminocyclohexane)platinum (II), sulfato(1,2-diaminocyclohexane)-platinum(II), dichloro(1,2-diaminocyclohexane)platinum(II) and dihydroxo(1,2-diaminocyclohexane)platinum(II) can be synthesized, for example, by the methods shown in the following formulas.

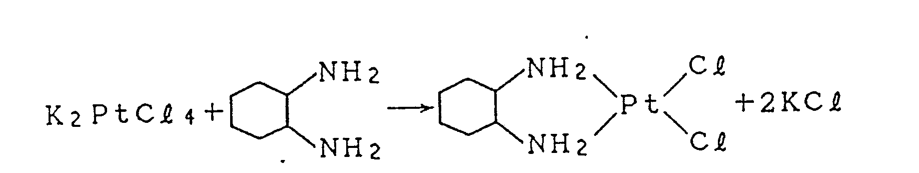

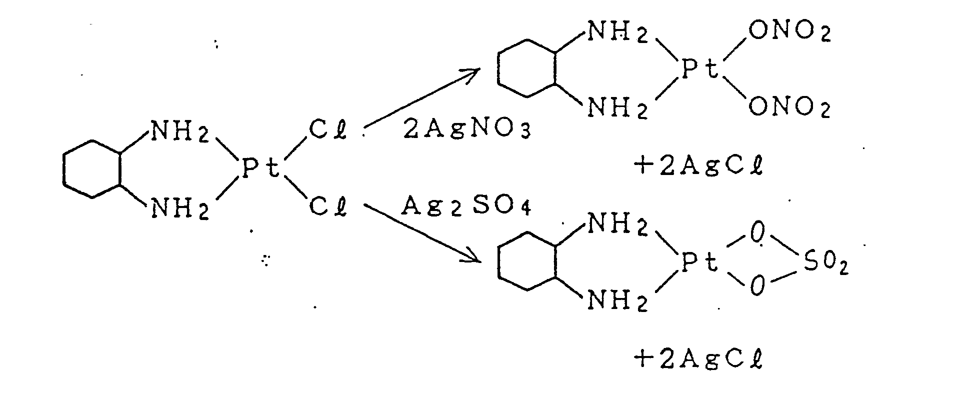

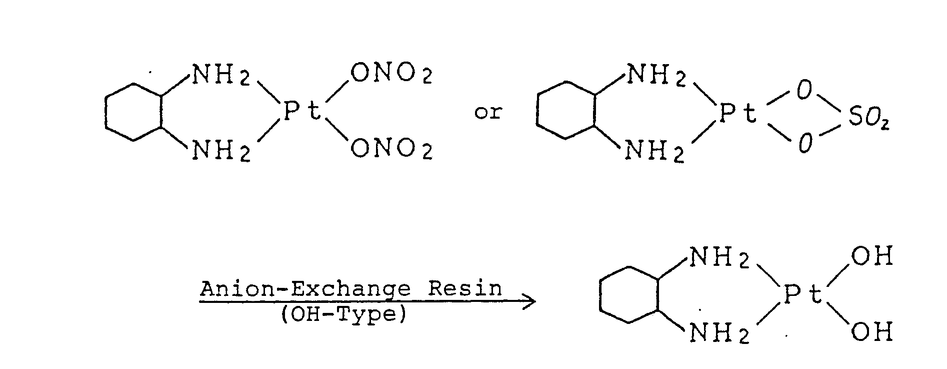

When dinitrato(1,2-diaminocyclohexane)platinum(II) or sulfato(1,2-diaminocyclohexane)platinum(II) is used as a material and is caused to react with any of the compounds shown by the foregoing formulas (XXII) through (XXXIV), it is important that the reaction is made in the presence of an alkali metal hydroxide or an alkaline-earth metal hydroxide. For such alkali metal hydroxide or alkaline-earth metal hydroxide, sodium hydroxide, potassium hydroxide or barium hydroxide is preferably used. The alkali metal hydroxide or alkaline-earth metal hydroxide is normally used in the range of from equivalent to twice the equivalent to dinitrato(1,2-diaminocyclohexane)-platinum(II) or sulfato(1,2-diaminocyclohexane)platinum-(II).

When dichloro(1,2-diaminocyclohexane)platinum(II) is used as a material and reacted with any of the compounds shown by the foregoing formulas (XXII) through (XXXV), it is necessary that the compound shown by any of the foregoing formulas (XXII) through (XXXV) is transformed into an alkali metal salt by an alkali metal hydroxide, and then converted to a silver salt by silver nitrate before, it is directly reacted with dichloro(1,2-diaminocyclohexane)platinum(II). Here, as an alkali metal hydroxide, sodium hydroxide or potassium hydroxide is preferably used. The alkali metal hydroxide or silver nitrate is used in the range of 1 to 1.5 times equivalent to the compound shown by any of the foregoing formulas (XXII) through (XXXV).

When dihydroxo(1,2-diaminocyclohexane)platinum(II) is used as a material and is reacted with any of the compounds shown by the foregoing formulas (XXII) through (XXXV), the reaction may be made without presence of an alkali metal hydroxide or an alkaline-earth metal hydroxide.

The reaction is normally carried out by using 1 to 2.5 mols of any of the compounds shown by said formulas (XXII) through (XXXV) to dinitrato(1,2-diaminocyclohexane)platinum(II), sulfato(1,2-diaminocyclohexane)-platinum(II), dichloro(1,2-diaminocyclohexane)platinum(II) or dihydroxo(1,2-diaminocyclohexane)platinum(II) and mixing them in an aqueous solution or water-ethanol solution at room temperature and under atmospheric pressure. The compound thus obtained according to the present invention may contain water as an aquo complex, and such aquo complex is included in the scope of the compound of the present invention. The aquo complex may contain water in a varying quantity depending on the condition of reaction, but in any case it is, of course, included in the scope of the compound of the present invention.

In this way, the platinum complex of the present invention is obtained.

The compound of the present invention can be separated by a conventional method. For example, it is obtainable by filtering the precipitated crystal from the reaction mixture.

As preferable embodiments of the platinum complex of the present invention, there may be listed the compounds expressed by the following formulas.

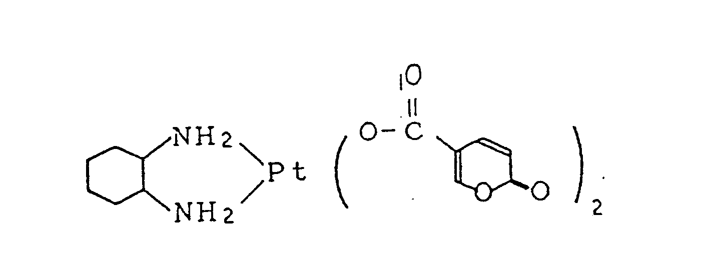

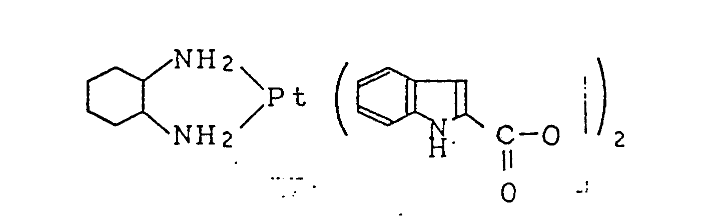

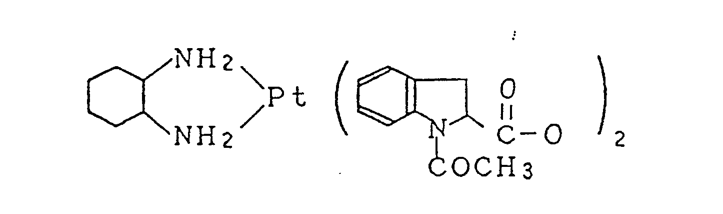

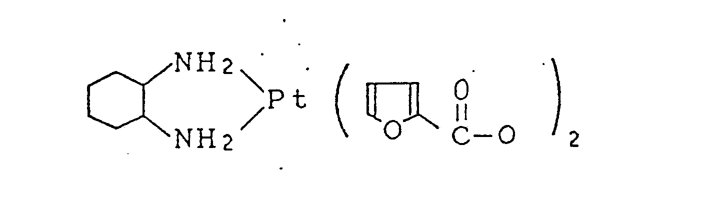

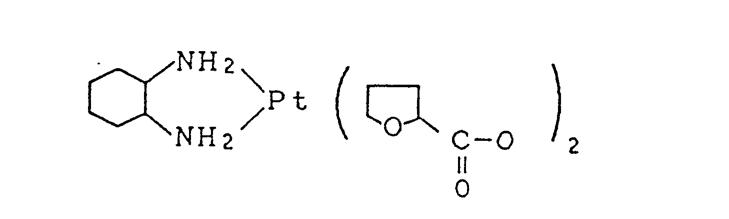

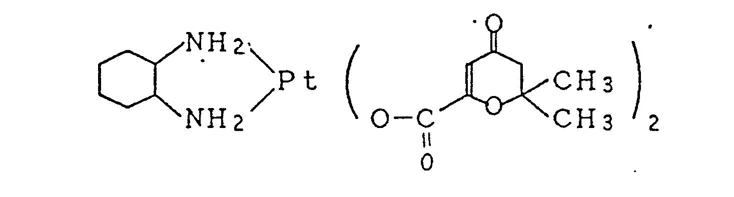

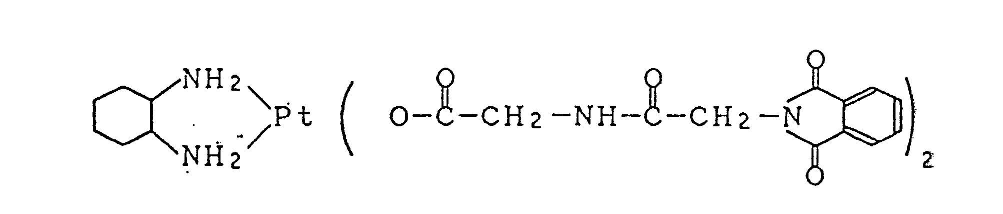

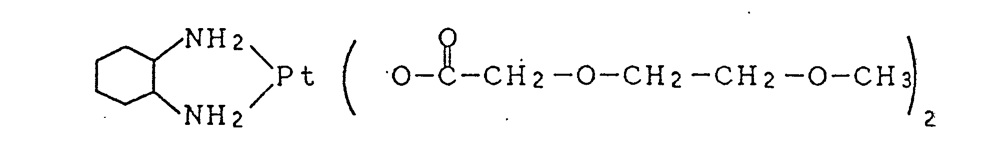

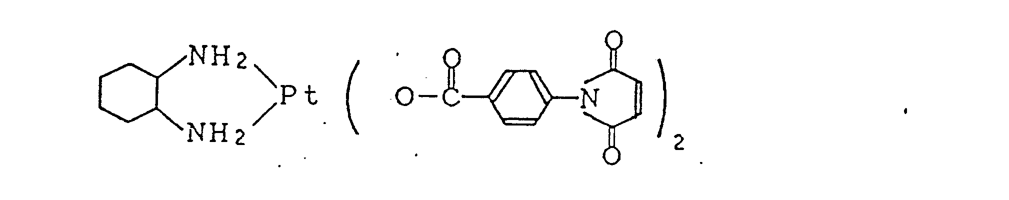

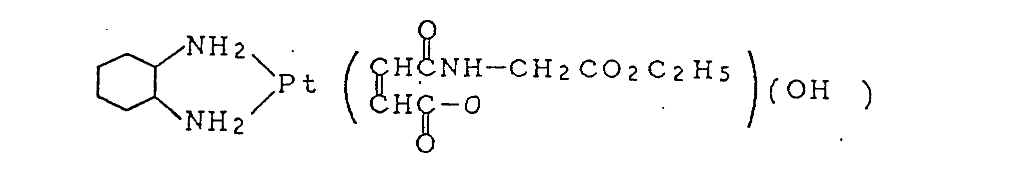

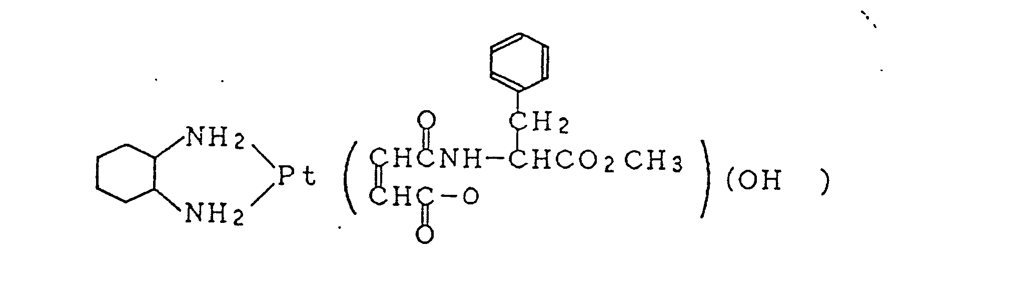

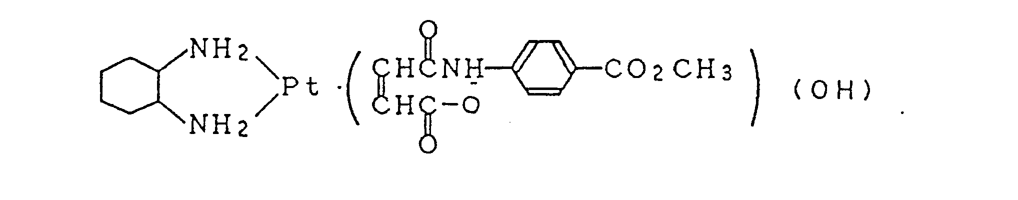

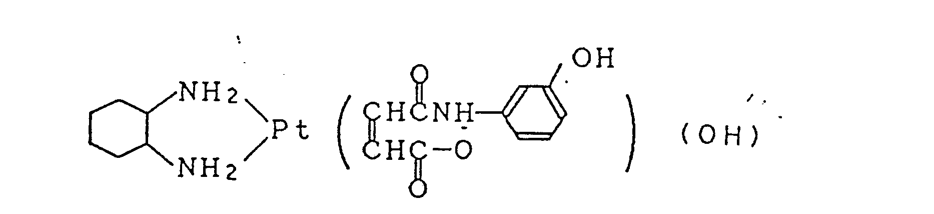

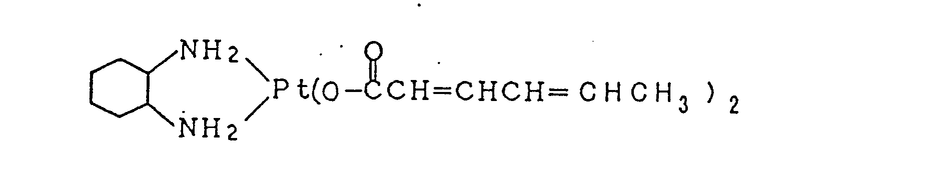

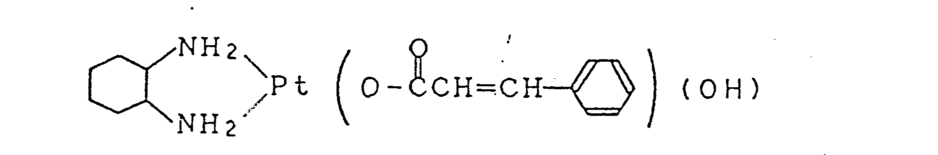

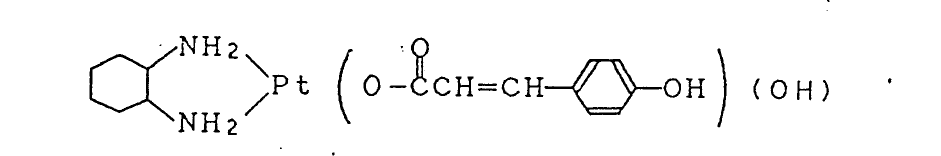

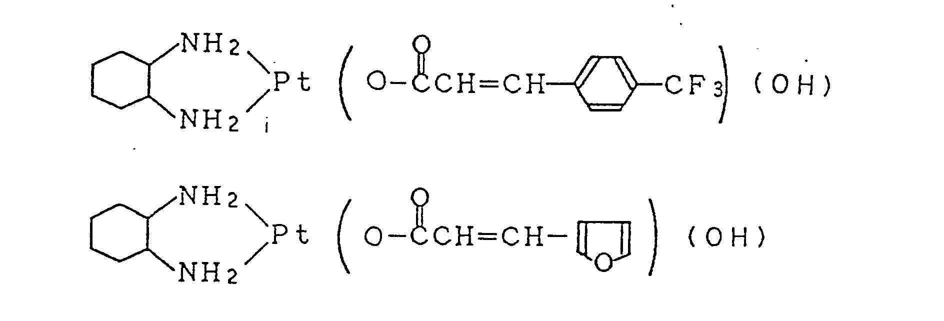

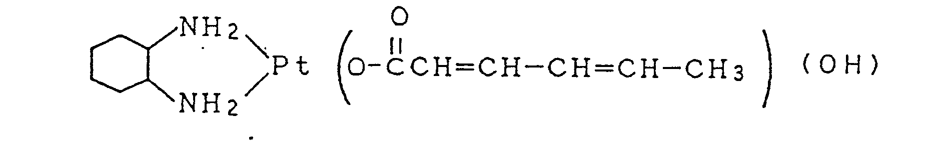

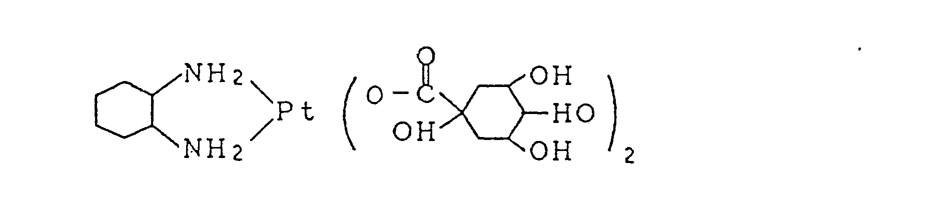

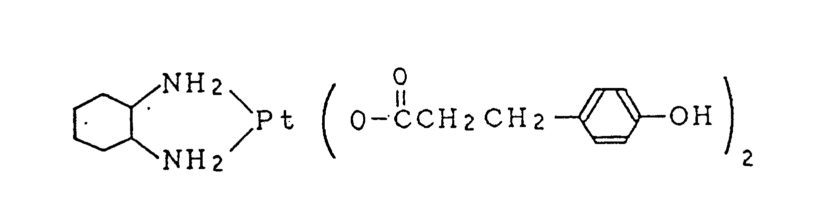

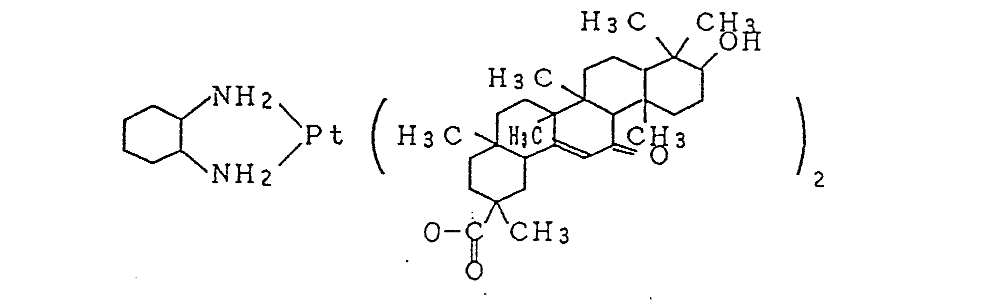

The compound of the present invention has a high antitumor activity and a low toxicity and is thus useful as an antitumor agent, that is, an agent for treatment of malignant tumors.

When it is clinically administered, the malignant tumor treatment agent of the present invention is used as a malignant tumor treatment agent composition comprising an effective amount of at least one of the compounds of the present invention combined or admixed with an excipient of carrier. This malignant tumor treatment agent composition is administered orally or through a non-orally route. The form of the agent comprises tablet, super-coated tablet, pill, capsule, powder, troche, liquid, suppository and injection, and these are produced with a pharmaceutically permitted excipient blended. For such excipient, there may be listed milk sugar, cane sugar, grape sugar, sorbitol, mannitol, potato starch, amylopectin and other starches, cellulose derivative (such as carbomethylcellulose and hydroxyethylcellulose), gelatin, magnesium stearate, poly(vinyl alcohol), calcium stearate, poly(ethylene glycol) wax, gum arabic, talc, titanium dioxide, vegetable oils such as olive oil peanut oil and sesame oil, paraffin oil, neutral fatty bases, ethanol, propylene glycol, physiological saline solution, sterile water, glycerine, coloring agents, flavors, thickeners, stabilizers, isotonic agents and buffers. In addition, pharmaceutically permitted excipients may be contained.

The treatment agent composition of the invention may contain the compound of the present invention in an amount of 0.001 to 85 percent by weight, or preferably 0.005 to 60 percent by weight.

The amount of administration of the treatment agent composition of the invention is dependent on the symptom but is 0.005mg to 200mg, or preferably O.Olmg to 50mg, per unit weight of an adult a day.

The present invention will now be described specifically with reference to the following examples.

### Example 1

Bis(2-pyrone-5-carboxylato)(trans-A-dach)platinum(II) To 40ml (7.5 millimol) of an aqueous solution of [Pt(trans-ℓ-dach)(OH)₂], 2.12g of coumaric acid was added, and the mixture was stirred overnight at room temperature. Then, it was stirred at 50°C for 1 hour and allowed to cool, and the precipitate was filtered out. To remove unreacted materials, the precipitate was repeatedly washed with water and ethanol and dried under vacuum at 40°C. There was obtained 2.4g of a light yellowish powder of bis(2-pyrone-5-carboxylato)(trans-ℓ-dach)platinum(II) hydrate (which will be referred to as the compound [XXII-I] of the present invention in the following).

Data of the melting point, values of elementary analysis and peaks of infrared absorption spectrum (IR) of the obtained complex were as follows.

### Melting point: 280-285°C (decomposed)

### Elementary analysis (%) as C₁₈H₂₀N₂O₈Pt·H₂O

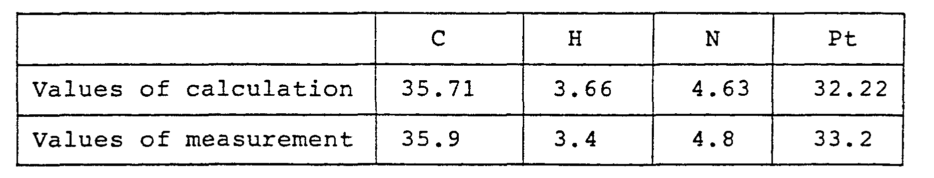

(Pt was determined by atomic absorption spectrometry.) IR (_{KBr}) (cm 1) 3250, 3090, 2950, 1740, 1640, 1360, 1240, 1100, 840, 780, 670

### Example 2

Bis(indole-2-carboxylato)(trans-ℓ-dach)platinum(II) To a solution having 1.79g of indole-2-carboxylic acid (11.1 millimols) dissolved in a solution of a mixture of ll.lml of 1N-NaOH, 55ml of ethanol and 20ml of water, 22ml (4.6 millimols) of an aqueous solution of Pt(trans-ℓ- dach)(ONO₂)₂ was added dropwise, and the mixture was stirred at room temperature for 5 hours. Then, the precipitated crystal was filtered out, dried and washed with ethyl acetate. Drying under vacuum, there was obtained 1.83g of bis(indole-2-caboxylato)(trans-ℓ-dach)-platinum(II) (which will be referred to as the compound [XXIII-1] of the present invention in the following).

Data of the melting point, values of elementary analysis and IR absorption peaks of the obtained complex were as follows.

### Melting point: 255-256°C (decomposed)

### Elementary analysis (%) as ^{C}₂₄^{H}₂₆^{N}₄⁰₄^{Pt}

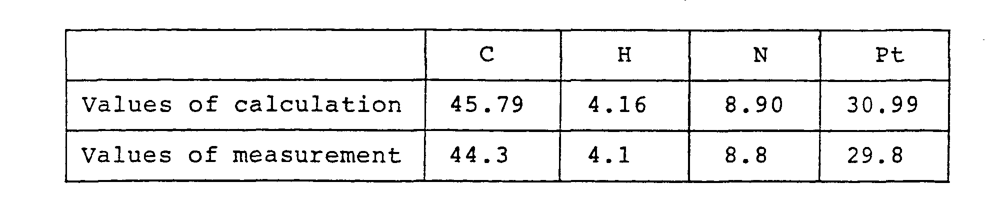

(Pt was determined by atomic absorption spectrometry.) IR (KBr) (cm⁻¹) 3400, 3260, 2940, 2850, 1610, 1530, 1390, 1320, 1280, 780, 750

### Example 3

### Bis(DL-1-acetylindoline-2-carboxylato)(trans-ℓ- dach)platinum(II)

To a solution having 1.65g (8.5 millimols) of DL-1- acetylindoline-2-carboxylic acid dissolved in a solution of a mixture of 8.5ml of 1N-NaOH, 20ml of ethanol and 30ml of water, 20ml (4.2 millimols) of an aqueous solution of Pt(trans-ℓ-dach)(ONO₂)₂ was added dropwise, and the mixture was stirred at room temperature for 20 hours under nitrogen atmosphere. The precipitated crystal was filtered out, dried, then washed with acetone. Drying under vacuum, there was obtained 1.78g (yield, 59%) of biDs(DL-1-acetylinedoline-2-carboxylato)(trans-ℓ-dach)-platinum(II) (which will be referred to as the compound [XXIII-2] of the present invention in the following).

Data of the melting point, values of elementary analysis and IR absorption peaks were as follows.

### Melting point: 213-216°C (decomposed)

### Elementary analysis (%) as ^{C}₂₈^{H}₃₄^{N}₄⁰₆^{Pt}

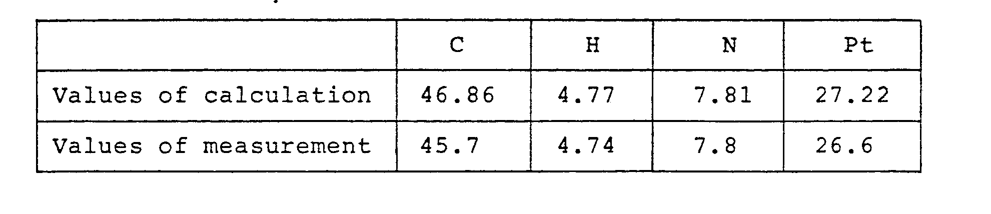

(Pt was determined by atomic absorption spectrometry.) IB (K_{Br}) (cm 1) 3450, 3220, 2940, 2860, 1640, 1600, 1480, 1400, 1280, 750

### Example 4

Bis(2-furancarboxylato)(trans-ℓ-dach)platinum(II) To a suspension of 0.86g of 2-furancarboxylic acid in 10ml of ion exchange water was added ethanol until 2-furancarboxylic acid was dissolved then 12.5ml (3.75 millimols) of an aqueous solution of Pt(trans-ℓ-dach) (OH)₂ added dropwise. Stirring overnight at room temperature, the precipitate was filtered out. To remove unreacted materials, rinsing and ethanol washing were repeatedly carried out, then drying under vacuum at 40°C, there was obtained 1.60g of a light yellow powder of bis(2-furancarboxylato)(trans-ℓ-dach)platinum(II)-hydrate (which will be referred to as the compound [XXIV-1] of the present invention in the following).

Data of the melting point, values of elementary analysis and IR absorption peaks of the obtained complex were as follows.

Melting point: 239-245°C (decomposed) _{E}lementary"analysis (%) as C₁₆H₂₀N₂O₆Pt·H₂O

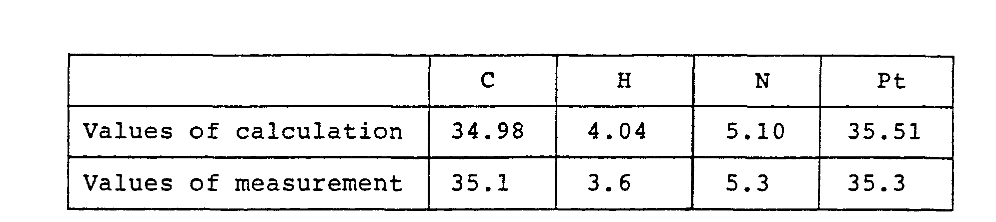

(Pt was determined by atomic absorption spectrometry.) IR (_{KBr}) (cm⁻¹) 3270, 3100, 2950, 2860, 1610, 1480, 1390, 1350, 1190, 1140, 1070, 1015, 940, 880, 780, 760, 600 470.

### Example 5

### Bis(DL-2-tetrahydrofurancarboxylato)(trans-ℓ-dach)-platinum(II)

Dissolving 10g of 2-furancarboxylic acid in 200ml of tetrahydrofuran and adding 1.2g of 5% palladium-carbon, the mixture was hydrogenated in a 500ml autoclave at room temperature and under a pressure of 15kg/cm² for 6 hours. Filtering the catalyst, the filtrate was fully concentrated, and there was obtained 10.lg of a pale brown transparent liquid of DL-2-tetrahydrofurancarboxylic acid. Data of the absorption peaks of nuclear magnetic resonance (NMR) spectrum of this compound were as follows.

### ¹HNMR(CDCℓ₃) δ (^{ppm})

### 2.05 (m, 4H), 3.95 (t, 2H), 4.5 (t, 1H), 8.29 (s, 1H).

To 1.23g of DL-2-tetrafurancarboxylic acid thus obtained, 15ml (3.75 millimols) of an aqueous solution of Pt(trans-ℓ-dach)(OH)₂ was added dropwise, and the mixture was stirred overnight at room temperature. Then, fully concentrating the reaction solution, the residue was dissolved in a minimum amount of ethanol, and an about 7 times amount of ethyl acetate was added. The precipitate was filtered out, repeatedly washed with ethyl acetate, then dried under vacuum at 40°C, and there was obtained 1.44g of (DL-2-tetrahydrofurancarboxylato)(trans-k-dach)-platinum(II)-hydrate (which will be referred to as the compound [XXIV-2] of the present invention in the following).

Data of the melting point, values of elementary analysis and IR absorption peaks were as follows.

### Melting point: 216-219°C (decomposed)

### Elementary analysis (%) as C₁₆H₂₈N₂O₆Pt·H₂O

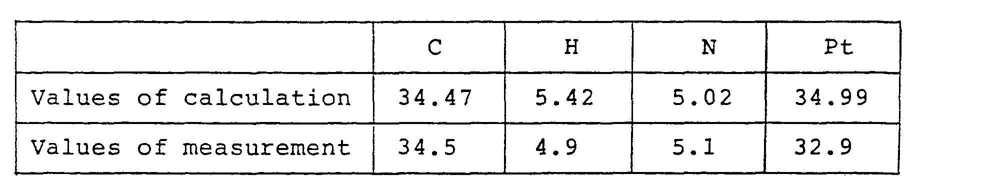

(Pt was determined by atomic absorption spectrometry.) IR (KBᵣ) (cm⁻¹) 3450, 3200, 2950, 2860, 1640, 1395, 1300, 1180, 1080, 920, 520, 440

### Example 6

Bis(3,4-dihydro-2,2-dimethyl-4-oxo-2H-pyrane- carboxylato)(trans-ℓ-dach)platinum(II)

To 10.5ml (3.75 millimols) of a water containing ethanol solution of Pt(trans-ℓ-dach)(OH)₂, 10ml of an ethanol solution of 1.40g of 3,4-dihydro-2,2-dimethyl-4-oxo-2H-pyrane-6-carboxylic acid was added dropwise. Stirring overnight at room temperature, the precipitate was filtered out. Then, it was repeatedly washed with ethyl acetate and dried under vacuum at 40°C, and there was obtained 1.80g of a yellow powder of bis(3,4-dihydro-2,2-dimethyl-4-oxo-2H-pyrane-6-carboxylato) (trans-k-dach)platinum(II)-hydrate (which will be referred to as the compound [XXV-1] of the present invention in the following).

Data of the melting point, values of elementary analysis and IR absorption peaks of the obtained complex were as follows.

### Melting point: 208.8-212.2°C

### Elementary analysis (%) as C₂₂H₃₂N₂O₈Pt·H₂O

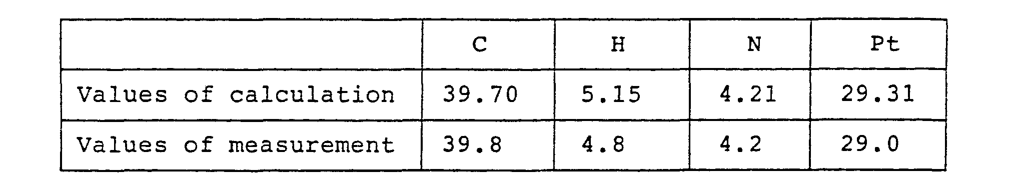

(Pt was determined by atomic absorption spectrometry.) IR (_{KBr}) (cm⁻¹) 3500, 3250, 2990, 2950, 1650, 1600, 1400, 1330, 1250, 1180, 1090, 880, 820, 520, 440

### Example 7

### Bis(phthaloylglycylglycinato)(trans-ℓ-dach)-platinum(II)

To the 500g of acetic acid added 82.76g of phthalic anhydride and 66.13g of glycylglycine and refluxed for 2 hours. After allowing to cool, the precipitate was filtered out and repeatedly washed with water, it was dried under vacuum at 40°C, and there was obtained 125.39g of a white crystal of phthaloylglycylglycine, melting at 227-228°C.

To 200ml (15.0 millimols) of an aqueous sodium hydroxide solution containing of 4.0g of phthaloylglycylglycine thus, 30ml (7.5 millimols) of an aqueous solution of Pt(trans-ℓ-dach)(H₂O)₂(NO₃)₂ was gradually added dropwise at room temperature. Stirring overnight at room temperature and further for 1 hour at 50°C, the precipitate was filtered out. After repeated washing with water, it was dried under vacuum at 40°C, and there was obtained 2.32g of a light yellow powder of bis-(phthaloylgycylglycinato)(trans-k-dach)platinum(II) dihydrate (which will be referred to as the compound [XXVI-1] of the present invention in the following).

Data of the melting point, values of elementary analysis and IR absorption peaks of the obtained complex were as follows.

### Melting point: 250-255°C

### Elementary analysis (%) as C30H32N60l0Pt.2H20

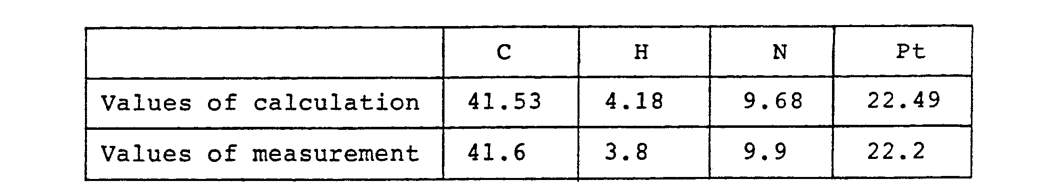

(Pt was determined by atomic absorption spectrometry.) IR (KBr) (cm⁻¹) 3360, 3230, 2930, 1705, 1630, 1550, 1415, 1390, 1225, 950, 745, 720, 640, 530, 480

### Example 8

### Bis(methoxyethoxymethylcarboxylato)(trans-ℓ-dach)-platinum(II)

Vigorously stirring 170ml of methyl cellosolve, 5.0g of sodium was gradually added under ice cooling, then 15ml of a methyl cellosolve solution containing of 10.27g of monochloroacetic acid was added dropwise at room temperature. After stirring overnight at room temperature, the excessive methyl cellosolve was evaporated at 50°C under a reduced pressure, and the residue was dissolved in a small amount of water. Then, under ice cooling, llml of conc. hydrochloric acid was gradually added dropwise, and after extracting the reaction product with ether, the ether layer was dried overnight with anhydrous magnesium sulfate. Filtering magnesium sulfate, the filtrate was evaporated at room temperature under a reduced pressure, and the residual liquid was further subjected to vacuum distillation for purification, and there was obtained 4.33g of methoxyethyoxymethylcarboxylic acid, boiling at 97.3-99.0°C (2mmHg).

Adding 0.8g of methoxyethyoxymethylcarboxylic acid thus obtained dropwise to 10ml (2.72 millimols) of an aqueous solution of Pt(trans-k-dach)(OH)₂, the mixture was stirred for 5 days at room temperature. After evaporation of the solvent under a reduced pressure at 50°C, the residue was dried in vacuo at 40°C and, for removing the unreacted materials, suspended in 150ml of ether and stirred overnight at room temperature. Filtering out the undissolved matter, it was repeatedly washed with ether and then dried in vacuo at 40°C, and there was obtained 1.34g of a light yellow powder of bis(methoxyethoxy- methylcarboxylato)(trans-ℓ-dach)platinum(II)-hydrate (which will be referred to as the compound [XXVII-1] of the present invention in the following).

Data of the melting point, values of elementary analysis and IR_{'}absorption peaks of the the obtained complex were as follows.

Melting point: 218-224°C (decomposed) Elementary analysis (%) as C₁₆H₃₂N₂O₈Pt·H₂O

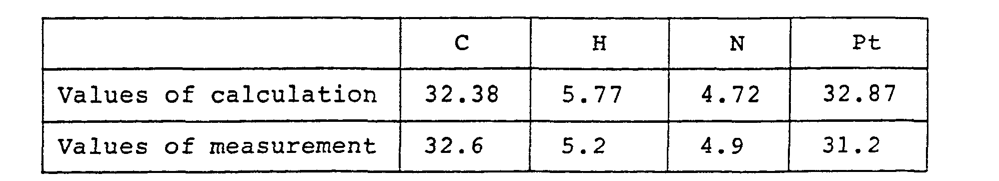

(Pt was determined by atomic absorption spectrometry.) IR (_{KBr}) (cm⁻¹) 3440, 3170, 2930, 1630, 1450, 1390, 1305, 1260, 1110, 1030, 850, 710, 520, 440

### Example 9

### Bis[N-(4-carboxyphenyl)maleimido](trans-ℓ-dach)-platinum(II)

Suspending 2.71g of N-(4-carboxyphenyl)maleamido and 11.58g of sodium acetate in 50ml of acetic anhydride, the mixture was stirred at 75°C for 20 minutes. After allowed to cool, 400ml of water was added under ice cooling, then the precipitate was filtered out, washed with water and dried in vacuo at 40°C, and there was obtained 2.11g of N-(4-carboxyphenyl)maleimido, melting at 239.2-239.7°C.

To a suspension of 1.67g of N-(4-carboxyphenyl)-maleimido in 10ml of water, 10ml (3.75 millimols) of an aqueous [Pt(trans-ℓ-dach)(OH)₂) solution was added dropwise. After stirring overnight at room temperature, the insoluble matter was filtered out and repeatedly washed with water and ethanol. Then, vacuum drying at 40°C, there was obtained 2.46g of a light yellow powder of bis[N-(4-carboxyphenyl)maleimido](trans-ℓ-dach)-platinum(II) dihydrate (which will be referred to as the compound [XXVIII-1] of the present invention in the following).

Data of the melting point, values of elementary analysis and IR absorption peaks of the obtained complex were as follows.

### Melting point: 273-278°C (decomposed)

### Elementary analysis (%) as C₂₈H₂₆N₄O₈Pt·H₂O

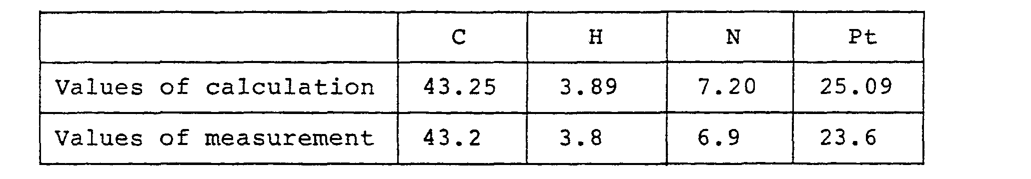

(Pt was determined by atomic absorption spectrometry.) IR (KBᵣ) (cm⁻¹) 3200, 2930, 1710, 1600, 1400, 1385, 1215, 1175, 1145, 825, 705, 584, 545, 510

### Example 10

### N-(ethoxycarbonylmethyl)maleamido-hydroxo(trans-ℓ- dach)platinum(II)

Dissolving 5g of ethyl glycinate hydrochloride and 2.94g of sodium.acetate in 50ml of acetic acid, the solution was stirred for 10 minutes at room temperature. To this solution, 3.51g of maleic anhydride was added, and the mixture was stirred overnight at room temperature. Filtering the insoluble matter, the filtrate was evaporated under a reduced pressure at 40°C, and the residue was dissolved in a minimum amount of ethanol. After filtering the insoluble matter, the filtrate was evaporated under a reduced pressure at 40°C, and there was obtained 7.01g of N-(ethoxycarbonylmethyl)maleamido, melting at 89.5-90.5°C.

Adding 1.51g of N-(ethoxycarbonylmethyl)maleamido thus obtained to 30ml (7.5 millimols) of an aqueous solution of [Pt(trans-ℓ-dach)(OH)₂], the mixture was stirred overnight at room temperature and further for 7 hours at 60°C. After concentrating by evaporator at 40°C, the residue was dissolved in a minimum amount of ethanol at room temperature, and an about 7 times amount of ethyl acetate was added. Then, the precipitate was filtered and repeatedly washed with ethyl acetate and then dried in vacuo at 40°C. There was obtained 3.02g of a light yellow powder of N-(ethoxycarbonylmethyl)maleimido-hydroxo(trans-Q-dach)platinum(II)-hydrate (which will be referred to as the compound [XXIX-1] of the present invention in the following).

Data of the melting point, values of elementary analysis and IR absorption peaks of the obtained complex were as follows.

### Melting point: 261-266°C (decomposed) Elementary analysis (%) as C₁₄H₂₅N₃O₆Pt·H₂O

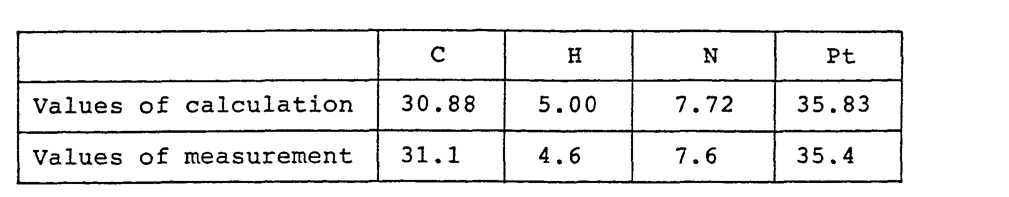

(Pt was determined by atomic absorption spectrometry.) IR (KBr) (cm⁻¹) 3400, 3220, 2940, 2850, 1740, 1600, 1380, 1200, 1060, 1030, 860, 560, 430

### Example 11

### N-(dℓ-2-phenyl-1-methoxycarbonylethyl)maleamido- hydroxo(trans-i-dach)platinum(II)

Dissolving 5g of di-phenylalanine methylester hydrochloride and 1.90g of sodium acetate in 50ml of acetic acid, the solution was stirred for 10 minutes at room temperature. To this solution, 2.4g of maleic anhydride was added, and the mixture was stirred overnight at room temperature. Filtering the insoluble matter, the filtrate was evaporated under a reduced pressure at 40°C, and the residue was dissolved in chloroform, and washed with water. It was evaporated under a reduced pressure at 40°C, and there was obtained 4.79g of N-(dℓ-2-phenyl-1-methoxycarbonylethyl)maleamido, melting at 109-110.8°C.

Taking 1.99g of N-(dℓ-2-phenyl-1-methoxycarbonylethyl)maleamido thus obtained and adding it to 30ml (7.5 millimols) of an aqueous solution of [Pt(trans-k-dach)(OH)₂], the mixture was stirred overnight at room temperature and further for 7 hours at 60°C. It was evporated under a reduced pressure at 40°C, the residue was dissolved in a minimum amount of ethanol, and an about 7 times amount of ethyl acetate was added. Filtering the precipitate, it was repeatedly washed with ethyl acetate and dried in vacuo at 40°C. There was obtained 3.45g of a light yellow powder of N-(dℓ-2-phenyl-1-methoxycarbonylethyl)maleamido-hydroxo(trans-i-dach)platinum(II)-hydrate (which will be referred to as the compound [XXIX-2] of the present invention in the following).

Data of the melting point, values of elementary analysis and IR absorption peaks of the obtained complex were as follows.

### Melting point: 263.0-268.0°C (decomposed) Elementary analysis (%) as C₂₀H₂₉N₃O₆Pt·H₂O

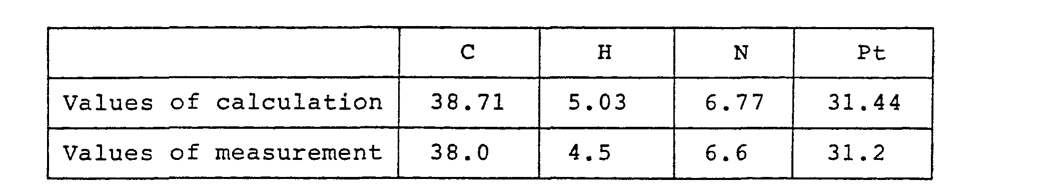

(Pt was determined by atomic absorption spectrometry.) IR (K_{B}r) (cm⁻¹)

3400, 3250, 2940, 2850, 1740, 1650, 1450, 1350, 1220, 1060, 1030, 700, 620, 500, 430

### Example 12

### N-(4-methoxycarbonylphenyl)maleamido-hydroxo(trans-A-dach)platinum(II)

Dissolving 10.Og of methyl-p-aminobenzoate hydrochloride and 4.37g of sodium acetate in 100ml of acetic acid, the solution was stirred for 10 minutes at room temperature. To this solution, 5.23g of maleic anhydride was added, and the mixture was stirred for 6 hours at room temperature. After filtering the insoluble matter, the filtrate was evaporated under a reduced pressure at 40°C. Rinsing the residue thoroughly, there was obtained 12.43g of N-(4-methoxycarbonylphenyl)-maleamido, melting at 194.5-197.1°C.

Taking 1.87g of N-(4-methoxycarbonylphenyl)maleamido thus obtained, it was added to 250ml (7.5 millimols) of an aqueous solution of [Pt(trans-ℓ-dach)(OH)₂], the mixture was stirred overnight at room temperature and further for 2 hours at 65°C. Filtering the insoluble matter, repeating rinsing and ethanol washing and vacuum drying at 40°C, there was obtained 3.33g of a light yellow powder of N-(4-methoxycarbonylphenyl)maleamido-hydroxo(trans-k-dach)platinum(II)-hydrate (which will be referred to as the compound [XXIX-3] of the present invention in the following).

Data of the melting point, values of elementary analysis and IR absorption peaks of the obtained complex were as follows.

### Melting point: 247.2-251.8°C (decomposed) Elementary analysis (%) as C₁₈H₂₅N₃O₆Pt·H₂O

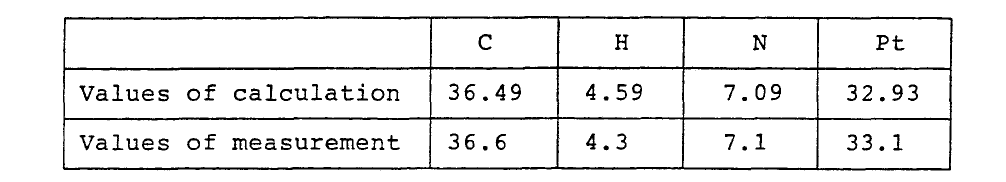

(Pt was determined by atomic absorption spectrometry.) IR (_{KBr}) (cm⁻¹) 3250, 2950, 1740, 1710, 1660, 1600, 1280, 1180, 1120, 870, 800, 770, 440

### Example 13

### N-(3-hydroxyphenyl)maleamido-hydroxo(trans-ℓ-dach)-platinum(II)

To a solution of 6.0g of m-aminophenol in 100ml of tetrahydrofuran, 5.66g of maleic anhydride was added, and the mixture was stirred for 4 hours at room temperature. Then, evaporating the solvent under a reduced pressure at 40°C, the residue was well washed with ethanol, and there was obtained 8.18g of N-(3-hydroxyphenyl)maleamido, melting at 164.1-166.8°C.

Taking 0.5g of N-(3-hydroxyphenyl)maleamide thus obtained, it was added to 10ml (2.39 millimols) of an aqueous solution of [Pt(trans-ℓ-dach)(OH)₂], and the mixture was stirred for 5 days at room temperature. Filtering the insoluble matter, repeating rinsing and vacuum drying at 40°C, there was obtained 0.77g of a light yellow powder of N-(3-hydroxyphenyl)maleamido-hydroxo-(trans-£-dach)platinum(II)-hydrate (which will be referred to as the compound [XXIX-4] of the present invention in the following).

Data of the melting point, values of elementary analysis and IR absorption peaks of the obtained complex were as follows.

### Melting point: 253-256°C (decomposed)

### Elementary analysis (%) as C₁₆H₂₃N₃O₅Pt·H₂O

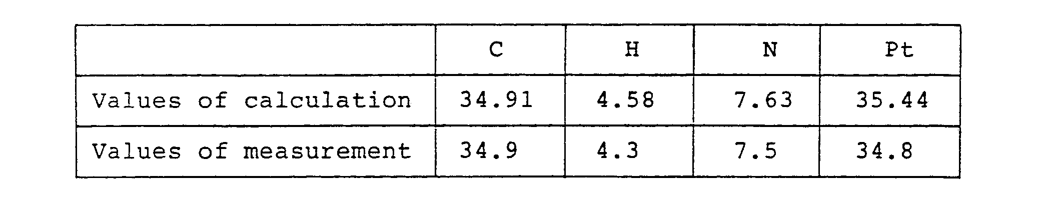

(Pt was determined by atomic absorption spectrometry.) IR (KBr) (cm⁻¹) 3220, 2940, 1600, 1440, 1160, 1060, 860, 780, 690

### Example 14

Bis(2-propenylacrylate)(trans-ℓ-dach)platinum(II) To 100ml (7.5 millomols) of an aqueous solution of [Pt(trans-ℓ-dach)(H₂O)₂(NO₃)₂], 1.70g of sorbic acid in 50ml (15.2 millimols) of an aqueous solution of sodium hydroxide was gradually added dropwise at room temperature. Stirring overnight at room temperature and further for 1 hour at 50°C, the precipitate was taken by filtration. After repeated rinsing, it was dried in vacuo at 40°C, and there was obtained 3.27g of a light yellow powder of bis(2-propenylacrylate)(trans-k-dach)-platinum(II)-hydrate (which will be referred to as the compound [XXX-1] of the present invention in the following).

Data of the melting point, values of elementary analysis and IR absorption peaks of the obtained complex were as follows.

### Melting point: 215-221°C (decomposed)

### Elementary analysis (%) as C₁₈H₂₈N₂O₄Pt·H₂O

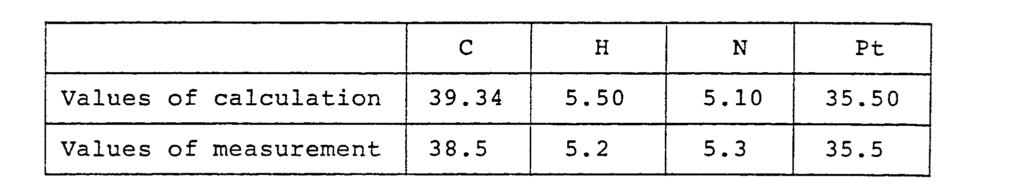

(Pt was determined by atomic absorption spectrometry.) IR (_{KBr}) (cm⁻¹) 3425, 3185, 3105, 2930, 2865, 1650, 1625, 1570, 1385, 1350, 1270, 1150, 990, 870, 800, 750, 510

### Example 15.

β-Phenylacrylate-hydroxo(trans-ℓ-dach)platinum(II) To 100ml (10 millimols) of an aqueous solution of [Pt(trans-ℓ-dach)(OH)₂], 1.56g of cinnamic acid was added, and the solution was stirred overnight at room temperature and further for 3 hours at 70°C. After filtrating the insoluble matter, the filtrate was evaporated under a reduced pressure at 40°C. Dissolving the residue in a minimum amount of ethanol, an about 8 times amount of ethyl acetate was added dropwise. Taking the presipitate by filtration, it was repeatedly washed with ethyl acetate, then dried in vacuo at 40°C. There was obtained 2.99g of a yellowish brown powder of β-phenylacrylate- hydroxo(trans-i-dach)platinum(II)-hydrate (which will be referred to as the compound [XXXI-1] of the present invention in the following).

Data of the melting point, values of elementary analysis and IR absorption peaks of the obtained complex were as follows.

### Melting point: 258-262.2°C (decomposed)

### Elementary analysis (%) as C₁₅H₂₂N₂O₃Pt·H₂O

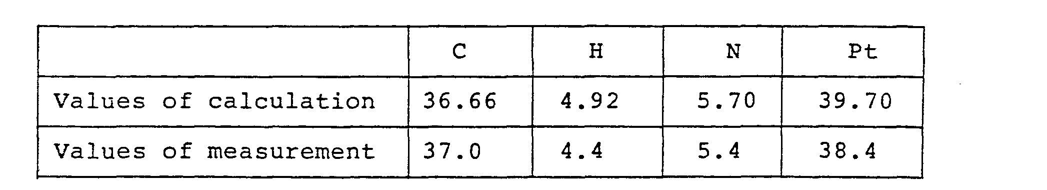

(Pt was determined by atomic absorption spectrometry.) IR (KBr) (_{cm} ¹) 3450, 3210, 3120, 2920, 2850, 1580, 1440, 1340, 1140, 1060, 1030, 980, 840, 700, 620, 440

### Example 16

2-Propenylacrylate-hydroxo(trans-ℓ-dach)platinum(II) Suspending 0.84g of sorbic acid in 10ml of water, 30ml (7.5 millimols) of an aqueous solution of [Pt(trans- ℓ-dach)(OH)₂] was added dropwise thereto. The solution was stirred overnight at room temperature and further for 2 hours at 70°C. After filtering the insoluble matter, the filtrate was evaporated under a reduced pressure at 40°C. The residue was dissolved in a minimum amount of ethanol, and an about 8 times amount of ethyl acetate was added dropwise. Taking the precipitate by filtration, it was repeatedly washed with ethyl acetate then dried in vacuo at 40°C. There was obtained 2.19g of a light yellow powder of 2-propenylacrylate-hydroxo(trans-k-dach)-platinum(II)-hydrate (which will be referred to as the compound [XXXI-2] of the present invention in the following).

Data of the melting point, values of elementary analysis and IR absorption peaks of the obtained complex were as follows.

### Melting point: 230.4-233.8°C (decomposed) Elementary'analysis (%) as C₁₂H₂₂N₂O₃Pt·H₂O

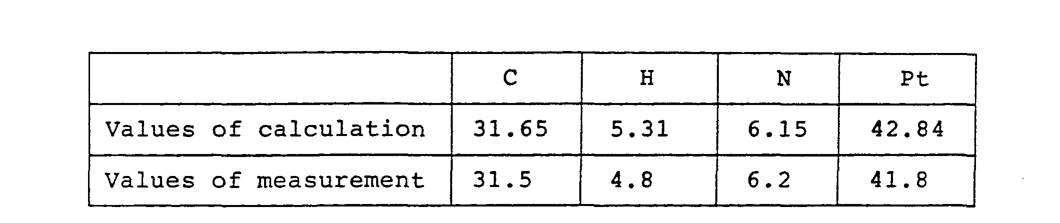

(Pt was determined by atomic absorption spectrometry.) IR (_{KBr}) (cm⁻¹) 3400, 3200, 2940, 2850, 1560, 1450, 1390, 1170, 1060, 1040, 920, 720, 580, 440

### Example 17

### 2-Furanacrylate-hydroxo(trans-i-dach)platinum(II)

To 20ml (7.5 millimols) of an aqueous solution of [Pt(trans-k-dach)(OH)2], 1.05g of 2-furan acrylic acid was added, and the mixture was stirred for 2 hours at room temperature. Then, ethanol was added until the precipitate was completely dissolved, and the mixture was stirred for 4 hours at 80°C. Distilling off the solvent under vacuum at 40°C, the residue was dissolved in a minimum amount of ethanol, and an about 8 times amount of ethyl acetate was added dropwise. Taking the precipitate by filtration, it was repeatedly washed with ethyl acetate and dried in vacuo at 40°C. There was obtained 2.37g of grayish green powder of 2-furanacrylate-hydroxo(trans- ℓ-dach)platinum(II)-dihydrate (which will be referred to as the compound [XXXI-3] of the present invention in the following).

Data of the melting point, values of elementary analysis and IR absorption peaks of the obtained complex were as follows.

### Melting point: 288-293°C (decomposed)

### Elementary analysis (%) C₁₃H₂₀N₂O₄Pt·H₂O

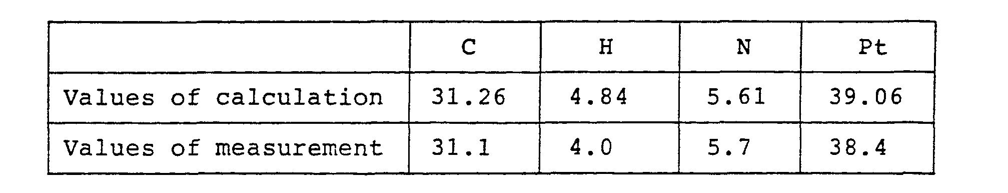

(Pt was determined by atomic absorption spectrometry.) IR (KBr) (cm⁻¹) 3450, 3220, 3120, 2930, 2850, 1580, 1450, 1360, 1240, 1150, 1060, 1030, 970, 920, 440

### Example 18

### β-(4-hydroxyphenyl)acrylate-hydroxo(trans-ℓ-dach)-platinum(II)

To 20ml (3.75 millimols) of an aqueous solution of [Pt(trans-ℓ-dach)(OH)₂], 0.62g of 4-hydroxycinnamic acid was added, the solution was stirred for 3 days at room temperature and further for 3 hours at 65°C and for 1 hour at 100°C. After allowing to cool thoroughly, the precipitate was filtered, washed with hot ethanol and dried in vacuo at 40°C. There was obtained 1.14g of a light yellow powder of P-(4-hydroxyphenyl)acrylate- hydroxo(trans-ℓ-dach)platinum(II) (which will be referred to as the compound [XXXI-4] of the present invention in the following).

Data of the melting point, values of elementary analysis and IR absorption peaks of the obtained complex were as follows.

### Melting point: Higher than 280°C (decomposed) Elementary analysis (%) as C₁₅H₂₂N₂O₄Pt

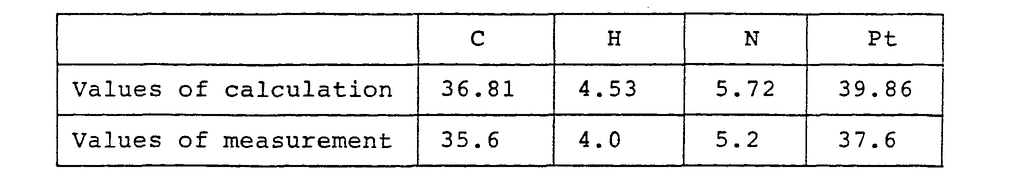

(Pt was determined by atomic absorption spectrometry.) IR (KBr) (cm ) 3400, 3220, 2950, 1630, 1590, 1510, 1450, 1370, 1240, 1160, 1060, 1030, 830, 520

### Example 19

### β-(4-trifluourmethylphenyl)acrylate-hydroxo(trans-ℓ- dach)platinum(II)

To 200ml (7.5 millimols) of an aqueous solution of [Pt(trans-ℓ-dach)(OH)₂], 1.62g of 4-trifluorumethyl- cinnamic acid was added, and the solution was stirred for 3 days at room temperature and further for 3 hours at 65°C and for 1 hour at 100°C. After allowing to cool, the precipitate was filtered, purified with hot ethanol, then dried in vacuo at 40°C, and there was obtained 1.20g of a brown powder of β-(4-trifluouromethylphenyl)acrylate- hydroxo(trans-i-dach)platinum(II) (which will be referred to as the compound [XXXI-5] of the present invention in the following).

Data of the melting point, values of elementary analysis and IR absorption peaks of the obtained complex were as follows.

### Melting point: 250-254°C (decomposed)

### Elementary analysis (%) as ^{C}₁₆^{H}₂₁^{N}₂^{F}₃⁰₃^{Pt}

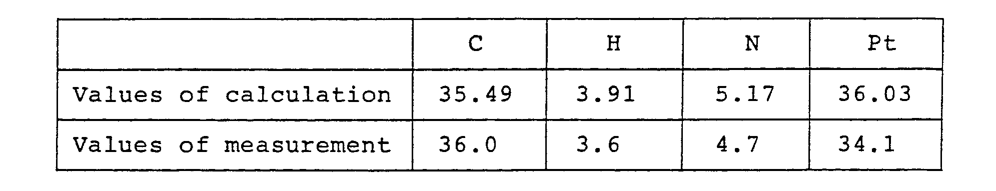

(Pt was determined by atomic absorption spectrometry.) IR (KBr) (cm⁻¹) 3420, 3200, 2920, 1640, 1580, 1360, 1320, 1160, 1120, 1060, 1020, 830, 720, 600, 500

### Example 20

### Bis(lR,3R,4R,5R-tetrahydroxycyclohexanecarboxylato)-(trans-ℓ-dach)platinum(II)

To 30ml (5 millimols) of an aqueous solution of (Pt(trans-ℓ-dach)SO₄], 30ml of an aqueous solution of 1.96g of quinic acid and 1.58g of barium hydroxide·8H₂O was added dropwise. The mixture was stirred for 4 days in a dark at room temperature, then the reaction solution was thoroughly ice cooled, and the precipitate was filtered. The filtrate was then fully concentrated and purified with water-ethanol, and there was obtained 2.17g of a light yellow powder of bis(lR,3R,4R,5R-tetrahydroxycyclohexane- carboxylato)(trans-ℓ-dach)platinum(II) (which will be referred to as the compound [XXXII-1] of the present invention in the following).

Data of the melting point, values of elementary analysis and IR absorption peaks of the obtained complex were as follows.

### Melting point: 174-179°C (decomposed)

### Elementary analysis (%) as C₂₀H₃₆N₂O₁₂pt·4H₂O

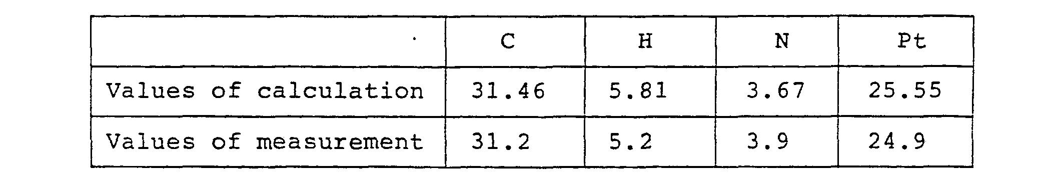

(Pt was determined by atomic absorption spectrometry.) IR (K_{Br}) (cm⁻¹) 3400, 2930, 1625, 1350, 1120, 1060, 960, 910, 880, 810, 750, 610, 530, 430

### Example 21

### Bis(3-(4-hydroxyphenyl)propionato)(trans-ℓ-dach)-platinum(II)

To 50ml (3.75 millimols) of an aqueous solution of [Pt(trans-ℓ-dach)(OH)₂], 1.31g of 3-(4-hydroxyphenyl)-propionic acid was gradually added at room temperature. The mixture was stirred for 5 days at room temperature, then the precipitate was taken by filtration. After repeated rinsing, it was dried in vacuo at 40°C, and there was obtained 2.06g of a white powder of (bis(3-(4-hydroxyphenyl)propionato)(trans-k-dach)platinum(II) (which will be referred to as the compound [XXXIV-1] of the present invention in the following).

Data of the melting point, values of elementary analysis and IR absorption peaks of the obtained complex were as follows.

### Melting point: 225-229°C (decomposed)

### Elementary analysis (%) as C₂₄^{H}₃₂^{N}₂⁰₆^{Pt}

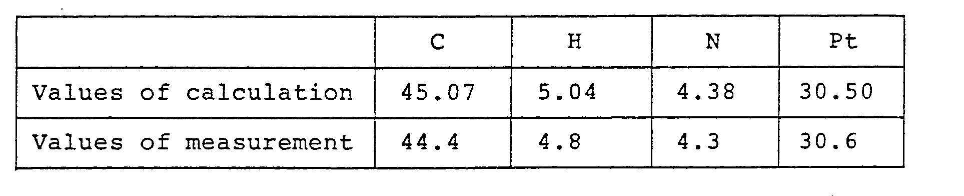

(Pt was determined by atomic absorption spectrometry.) IR (KBr) (cm⁻¹) 3440, 3210, 2910, 2860, 1770, 1620, 1450, 1370, 1250, 1180, 1060, 1030, 520, 440

### Example 22

### Bis(β-glycyrrhetinato)(trans-ℓ-dach)platinum(II)-tetrahydrate

Dissolving 1.3g (2.8 millimols) of β-glycyrrhetinic acid in 200ml (2.8 millimols) of a water-methanol solution containing of sodium hydroxide, 2.8ml of 1N-silver nitrate was added to the solution. After stirring for 1 hour at room temperature in the dark, dichloro(1,2-diaminocyclohexane)platinum(II) was added, and the mixture was stirred for 4 days at room temperature in the dark similarly. Extracting twice with 200ml of chloroform, the chloroform layer was dried with anhydrous magnesium acetate and fully concentrated. Purifying the concentrate with methanol- ethyl acetate, there was obtained 0.54g of a light yellow powder of bis(β-glycyrrhetinato)(trans-ℓ-dach)platinum-(II),tetrahydrate (which will be referred to as the compound [XXXV-1] of the present invention in the following).

Data of the melting point, values of elementary analysis and IR absorption peaks of the obtained complex were as follows.

### Melting point: 249-253°C (decomposed)

### Elementary analysis (%) as C₆₆H₁₀₄N₂O₈Pt·4H₂O

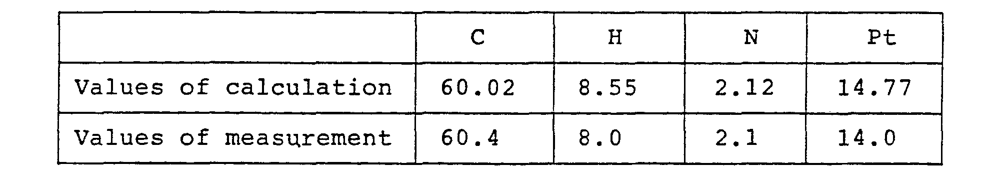

(Pt was determined by atomic absorption spectrometry.) IR (_{KBr}) (cm⁻¹) 3450, 2950, 2875, 1650, 1550, 1460, 1380, 1360, 1280, 1200, 1040, 1000, 540

### Example 23

L1210 murine leukemia cells which were subcultured in DBA/2 mouse were inoculated intraperitoneally into CDF1 mice at 10⁵ cells/mouse. Each experimental group was composed of 6-10 mice (male, 6-weeks old). Each test compound was administered three times, i.e., on the 1st, 5th and 9th days after tumor inoculation. CBDCA and CDDP were used as control drugs in this experiment. Each compound was dissolved or suspended in 0.05% "Tween 80" solution and administered in mice. Antitumor activity against L1210 leukemia was determined by T/C value calculated by the following formula and by the number of 30 days survival mice. 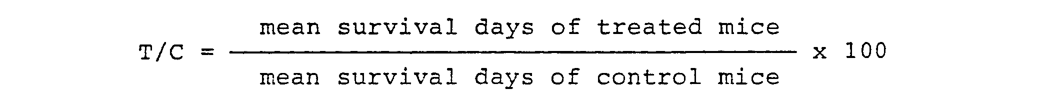 The results are shown in Table 1.

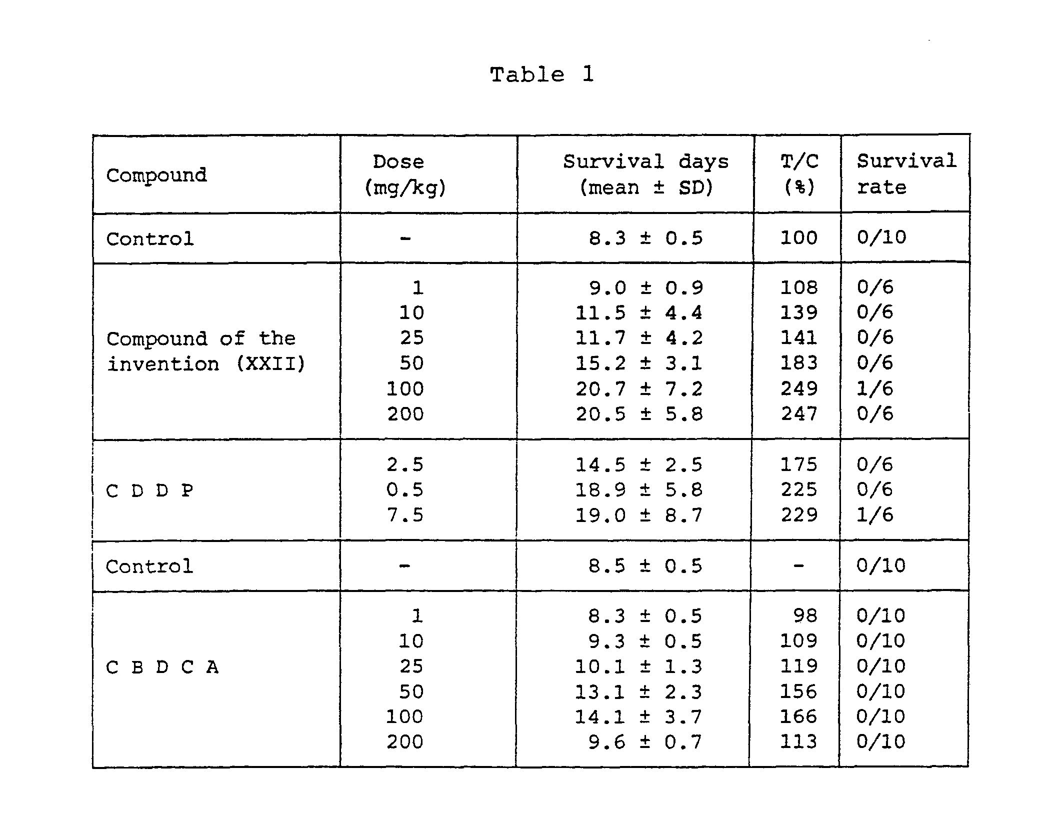

### Example 24

Antitumor activities of the compounds of the present invention, or (XXIII-1), (XXIII-2), (XXIV-1), (XXIV-2), (XXV-1), (XXVI-1) , (XXVII-1), (XXVIII-1), (XXIX-1), (XXIX-2), (VVIX-3), (XXIX-4), (XXX-1), (XXXI-1) , (XXXI-2), (XXXI-3), (XXXI-4), (XXXI-5), (XXXII-5), (XXXII-1), (XXXIV-1) and (XXXV-1), were determined similarly to Example 24. The results are shown in Tables 2 through 13 in the following.

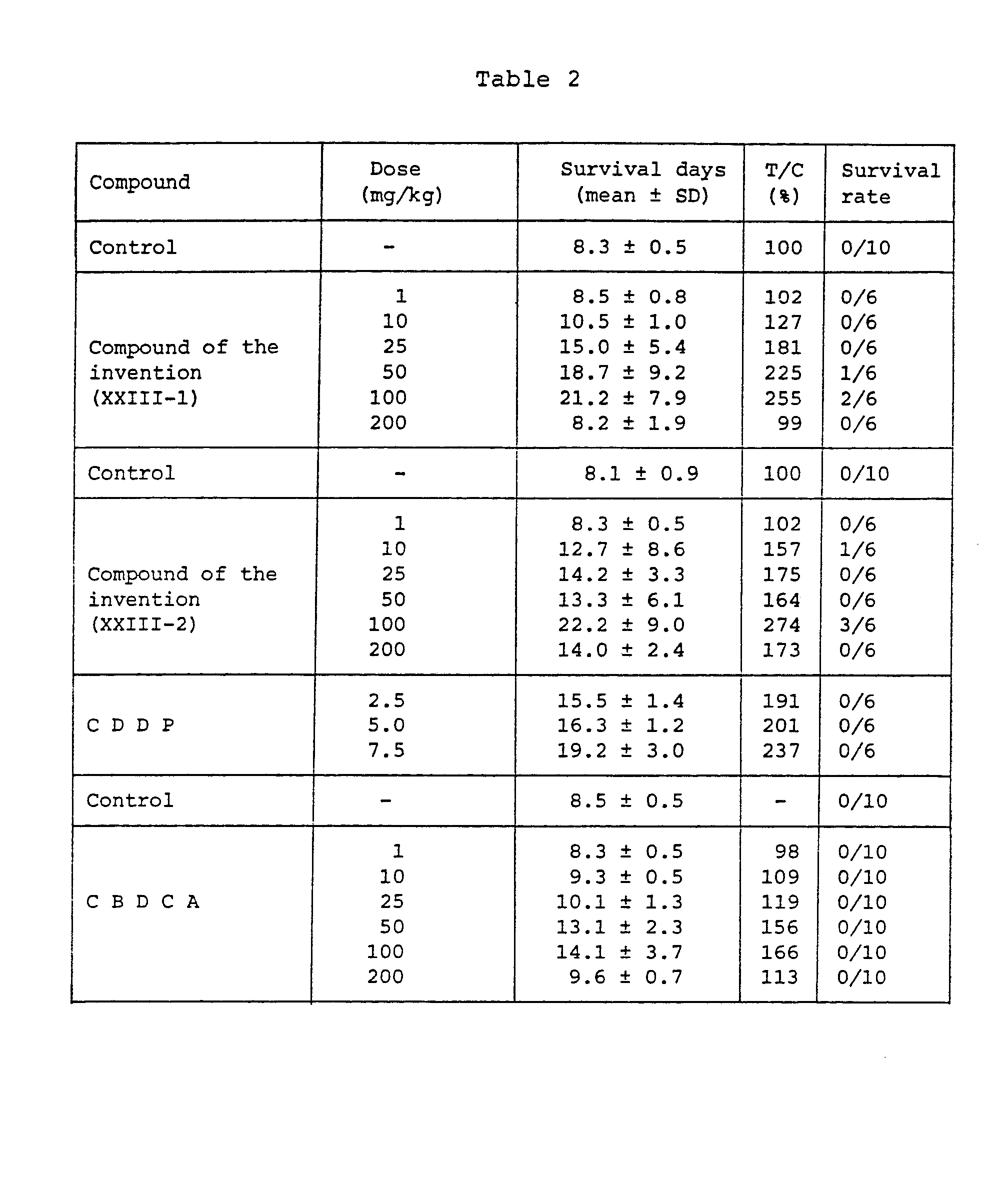

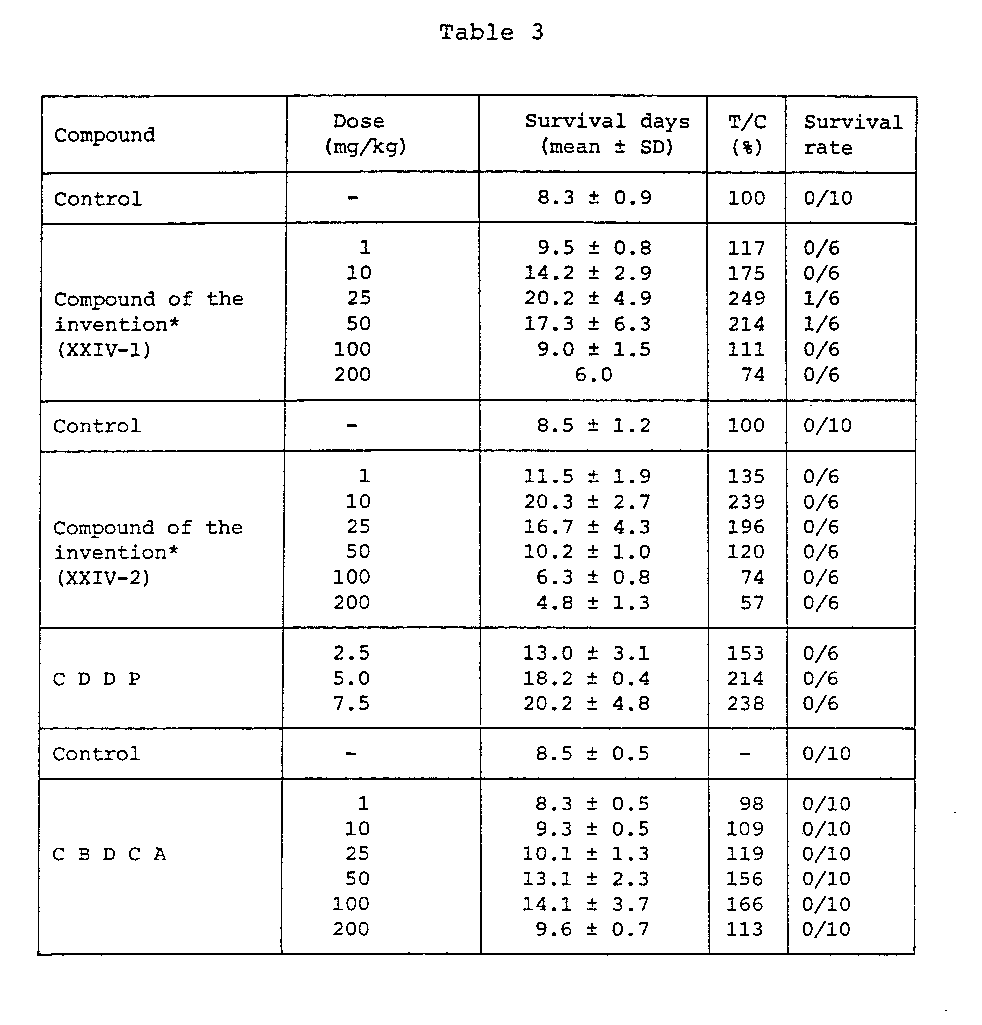

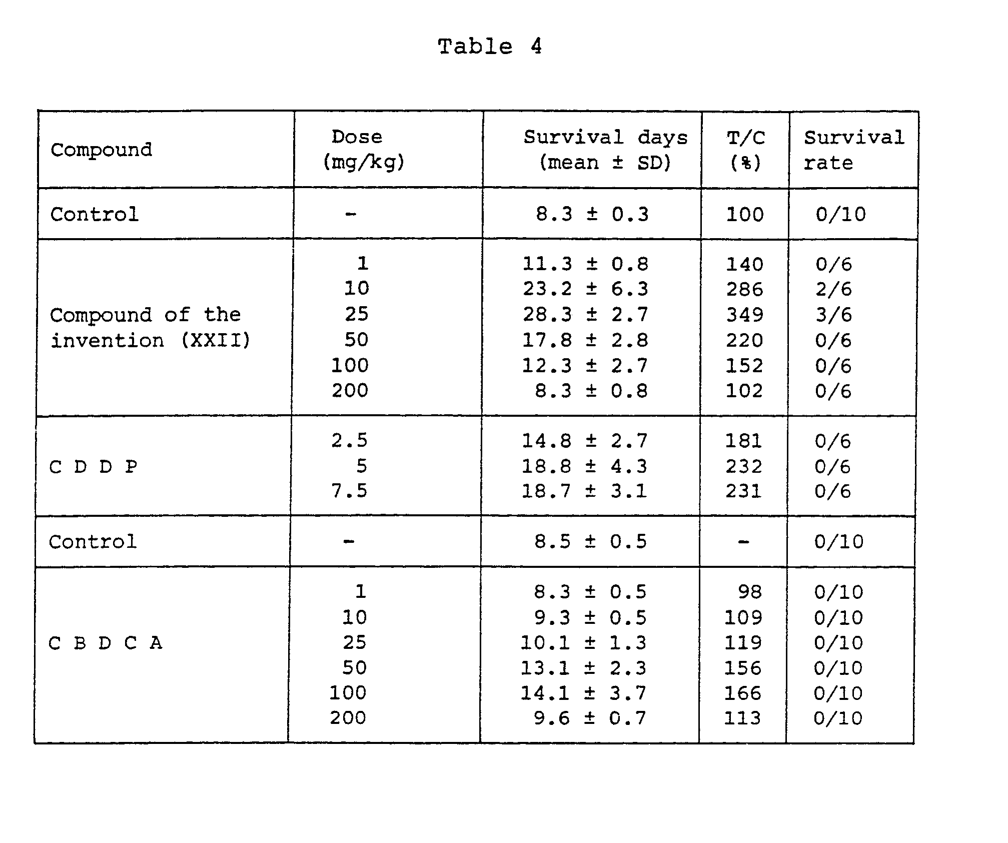

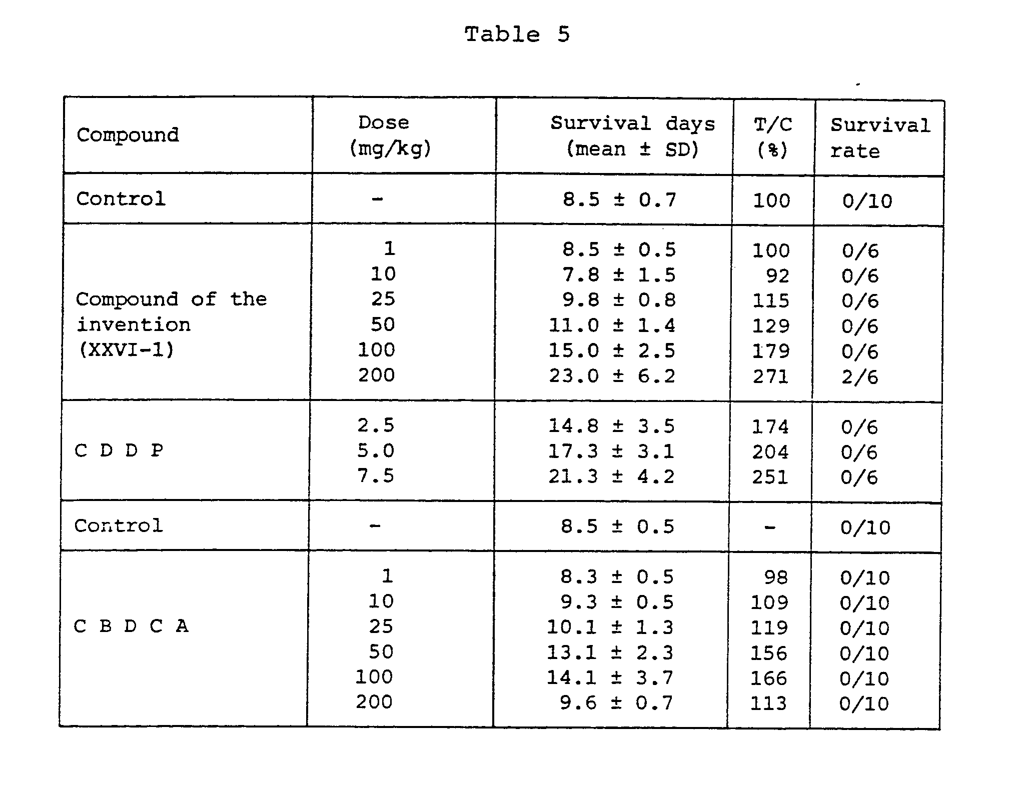

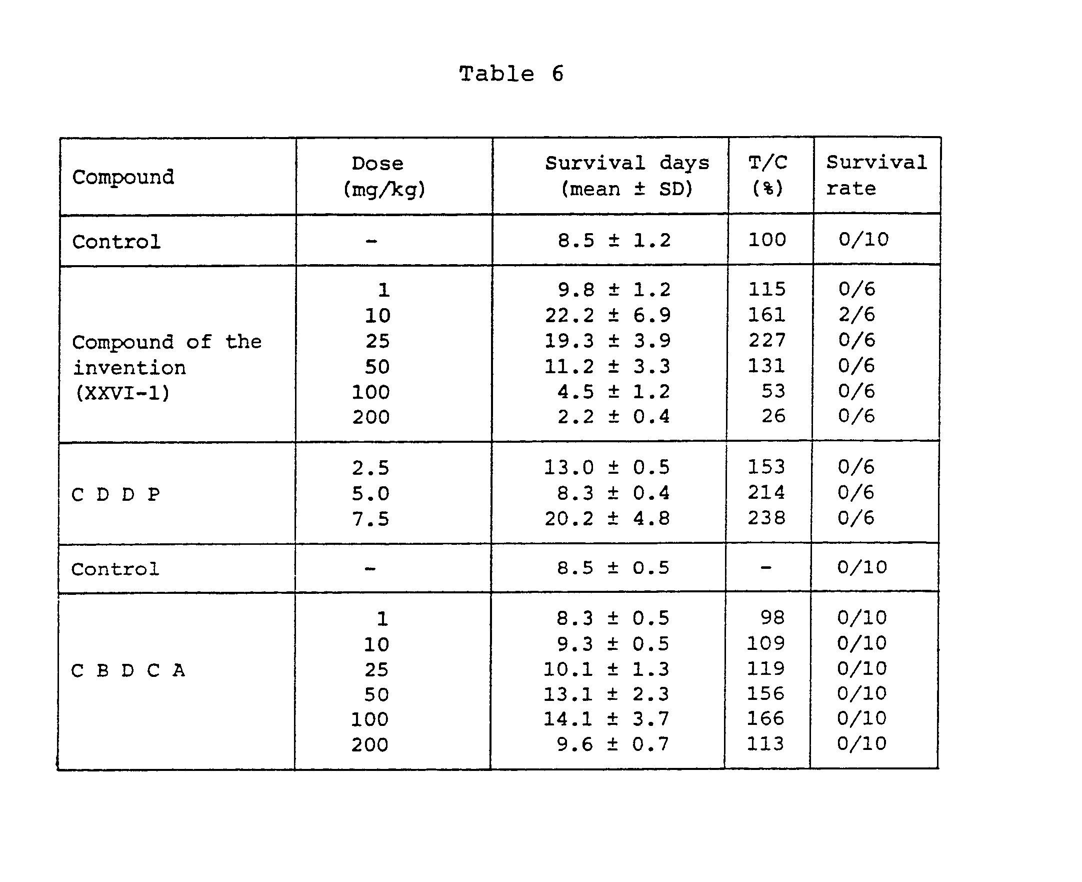

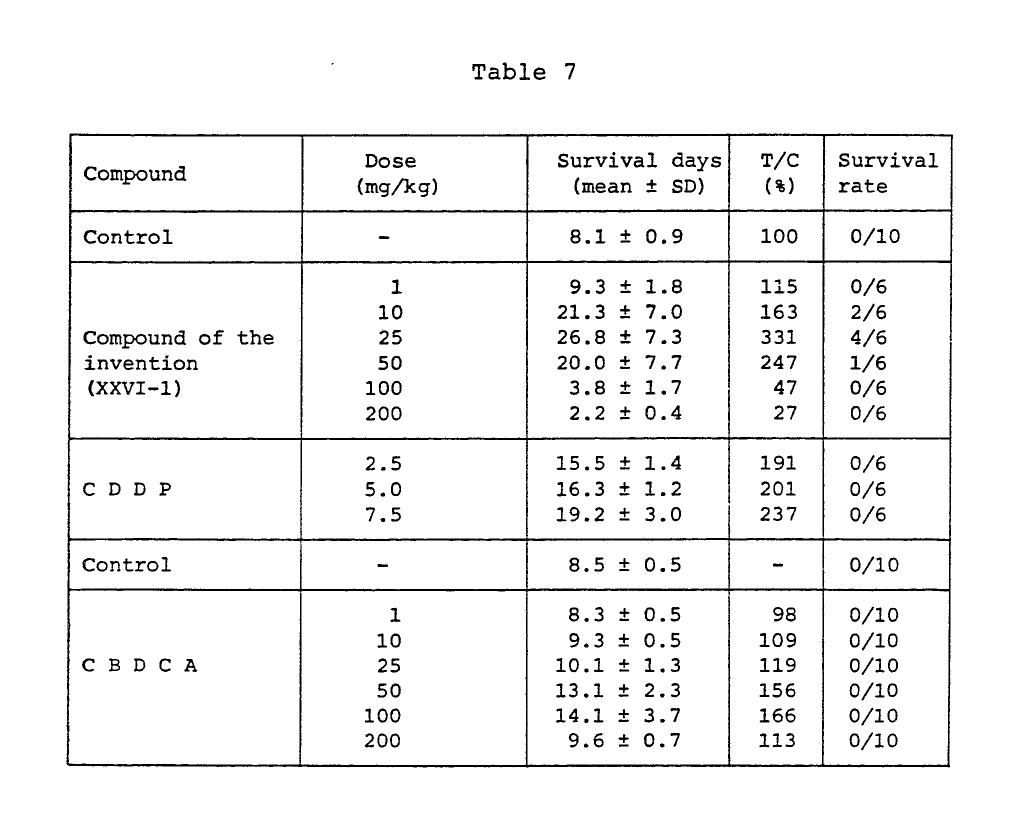

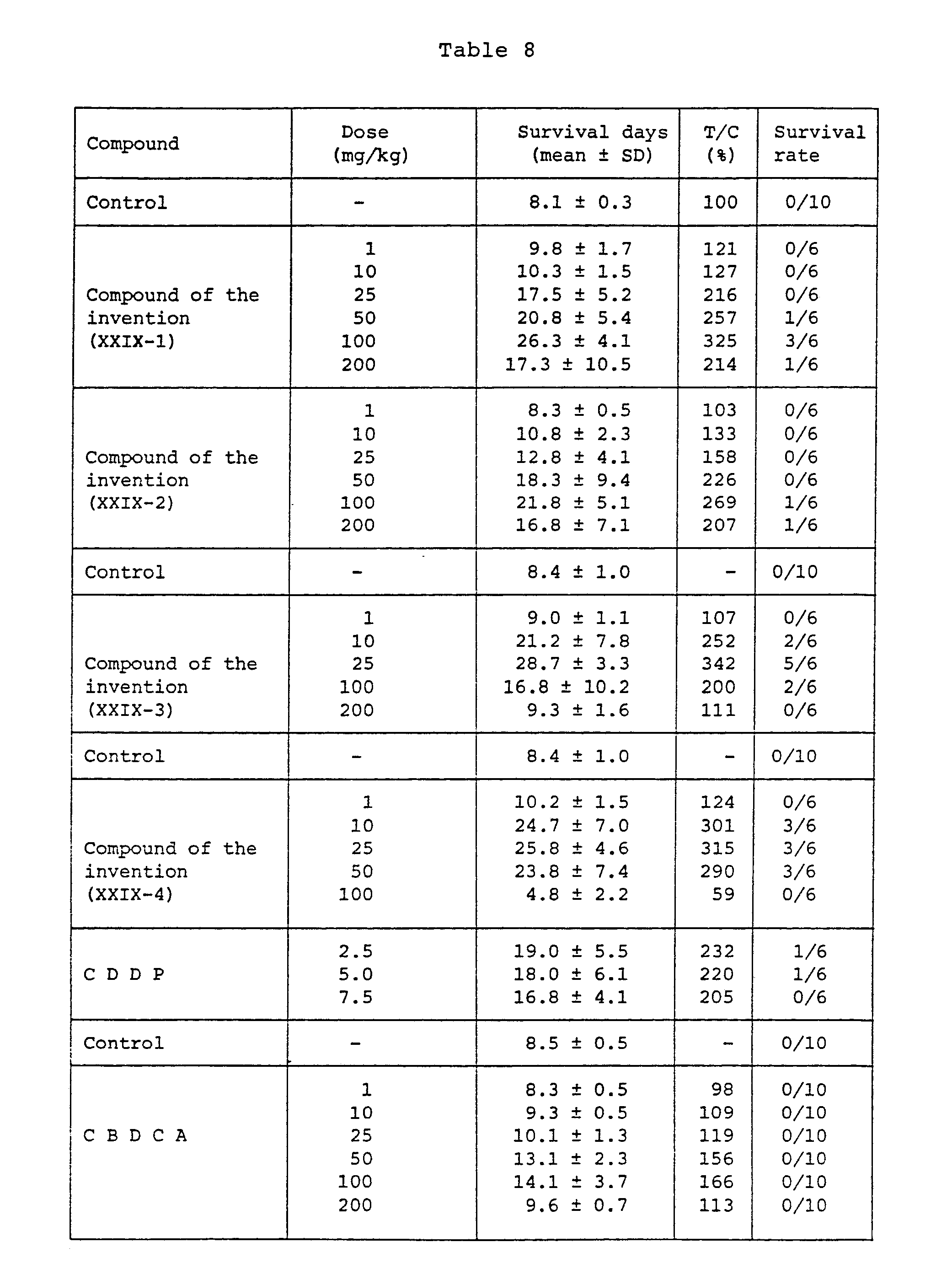

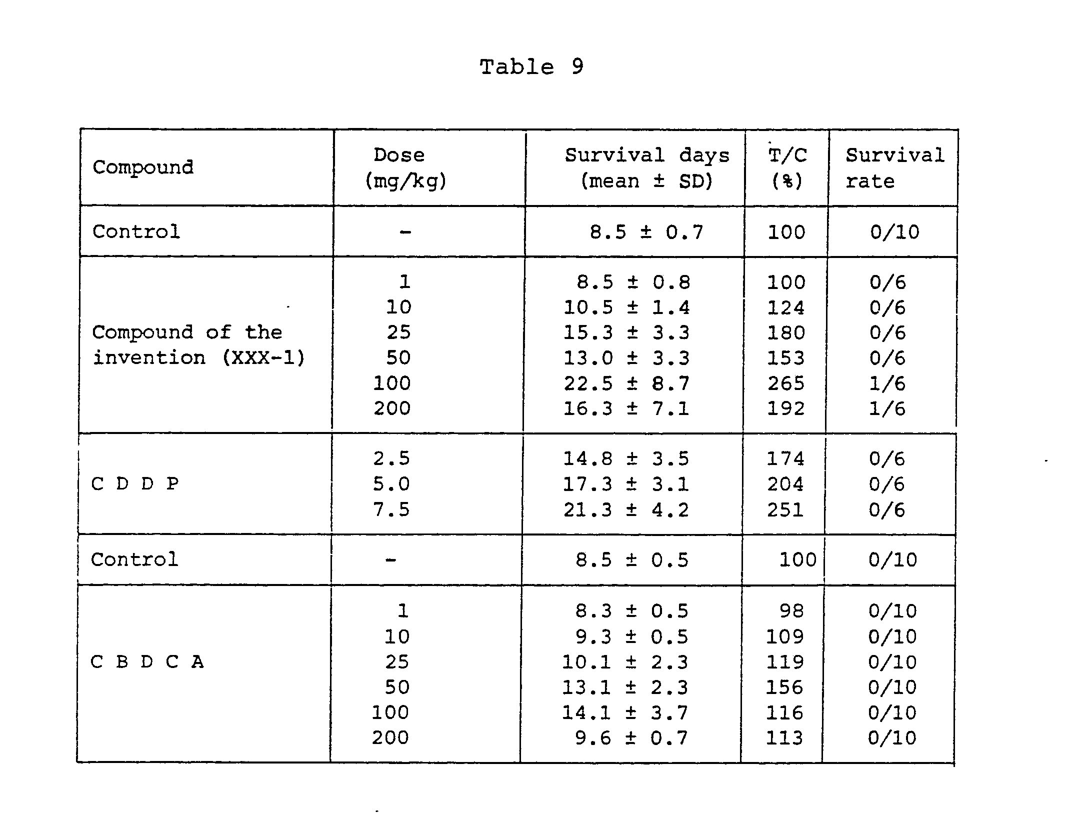

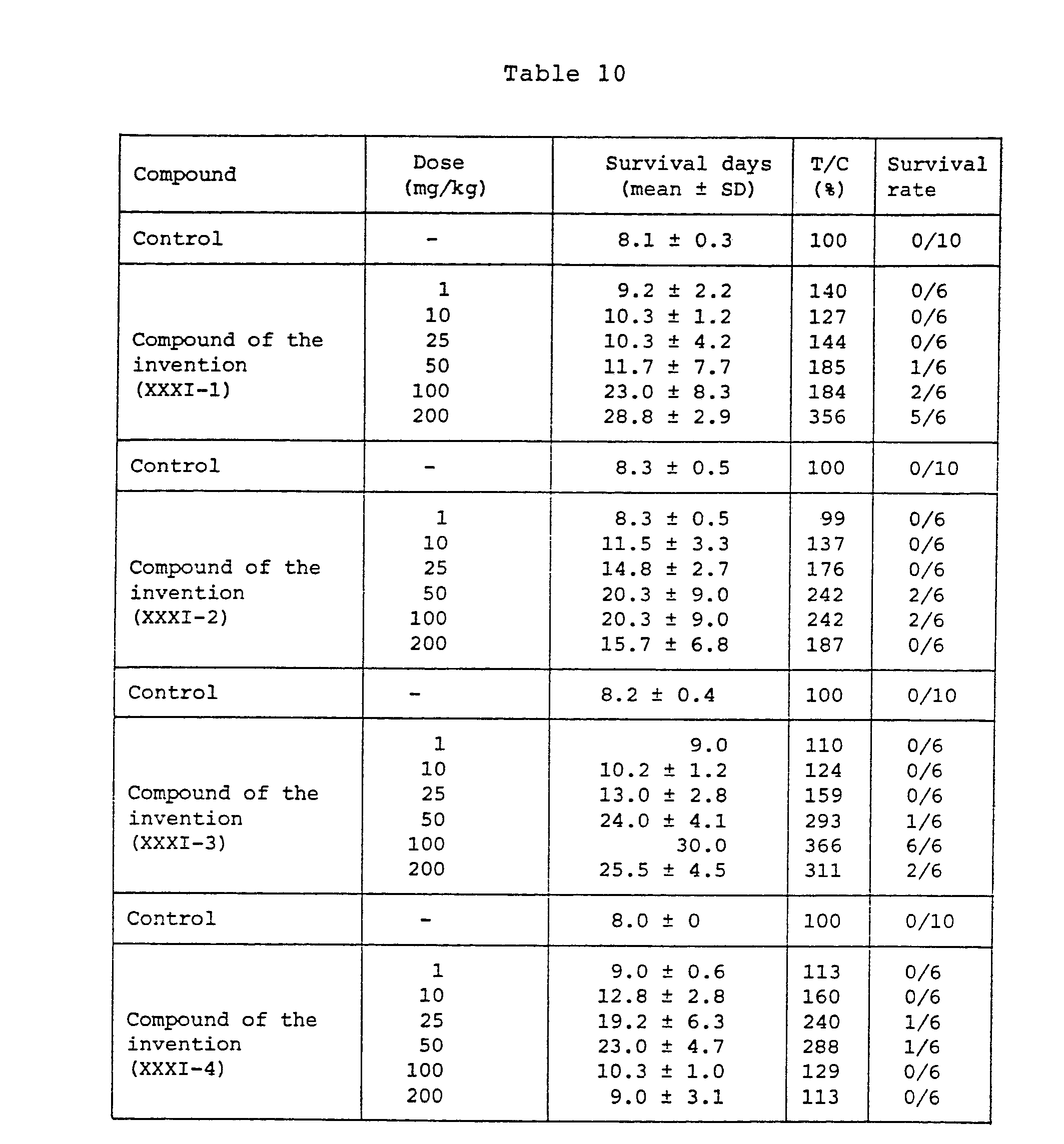

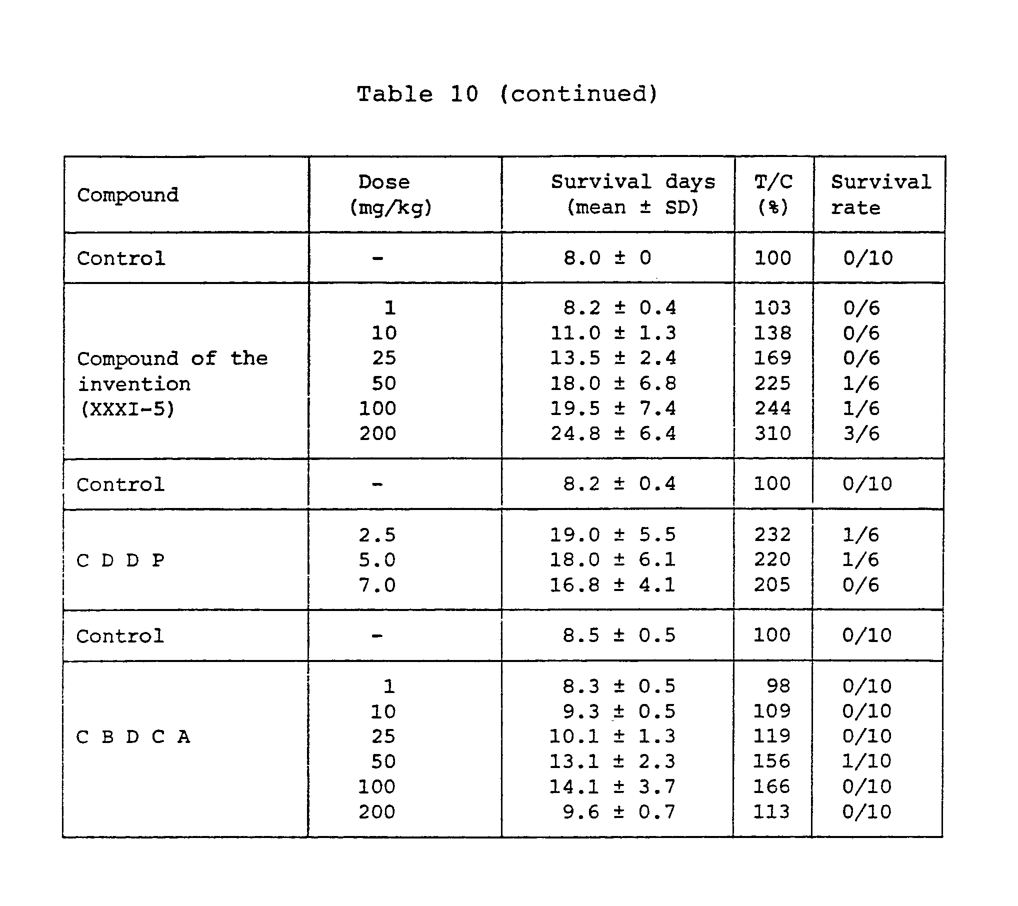

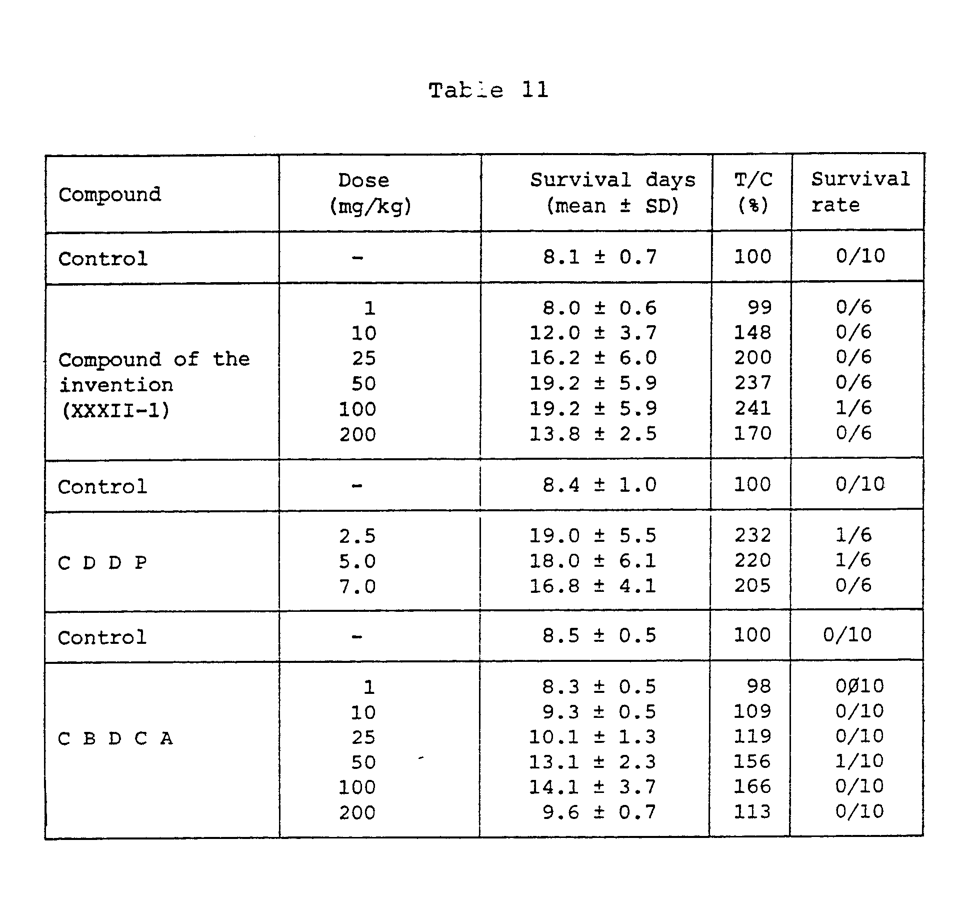

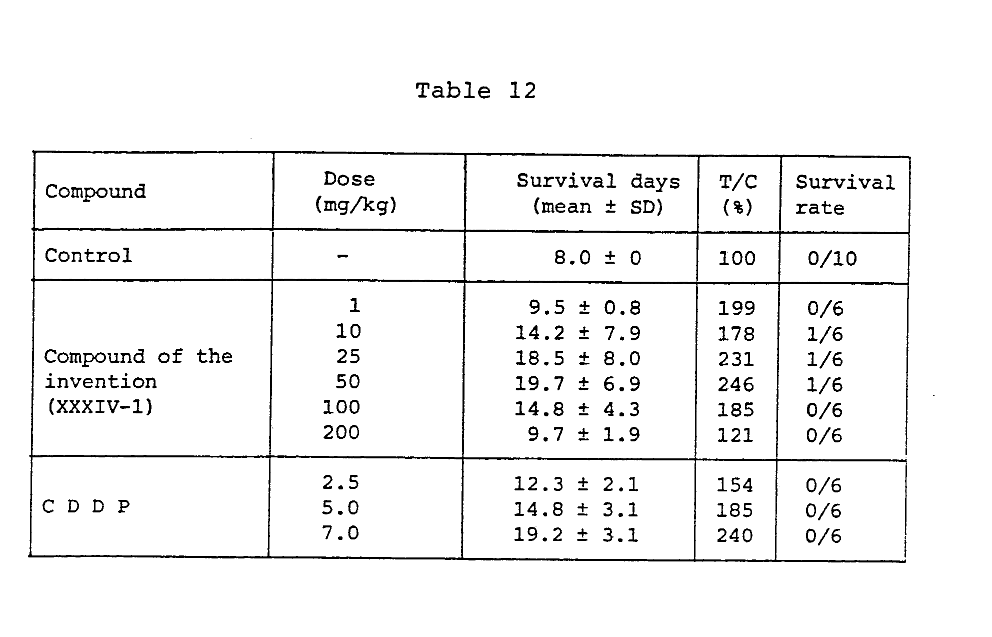

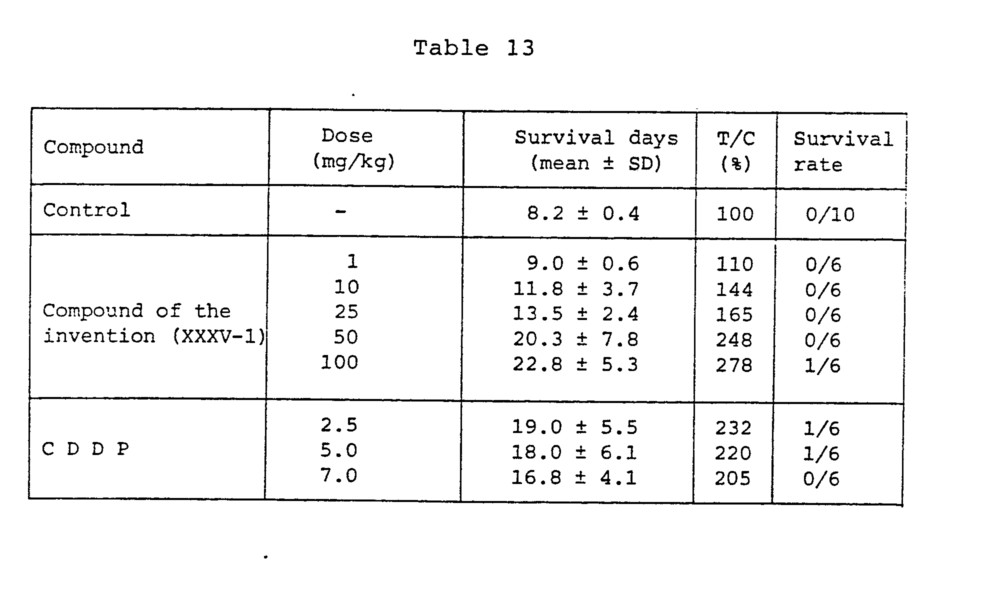

### Example 25

The acute toxicity tests of the compounds of the invention, or (XXII-1), (XXIII-2), (XXIV-1), (XXIV-2), (XXV-1), (XXVI-1), (XXVII-1), (XXVIII-1) , (XXIX-1), (XXIX-2), (XXIX-3), (XXIV-4), (XXX-1), (XXXI-1), (XXXI-2), (XXXI-3), (XXXI-4), (XXXI-5), (XXXII-1), (XXXIV-1) and (XXXV-1) to mice were carried out by using CDDP as the control. Platinum complexes to be tested was administered intraperitoneally to Slc:ICR mice (male, 5 weeks old, 6 mice/group). Each complex was used in the form of a solution or suspension in a 0.05% "Tween 80" in saline. The LD₅₀ value was calculated by the Miller-Tainter method from the death rate on the 14th day from the date of the administration. The results are shown in Table 14.

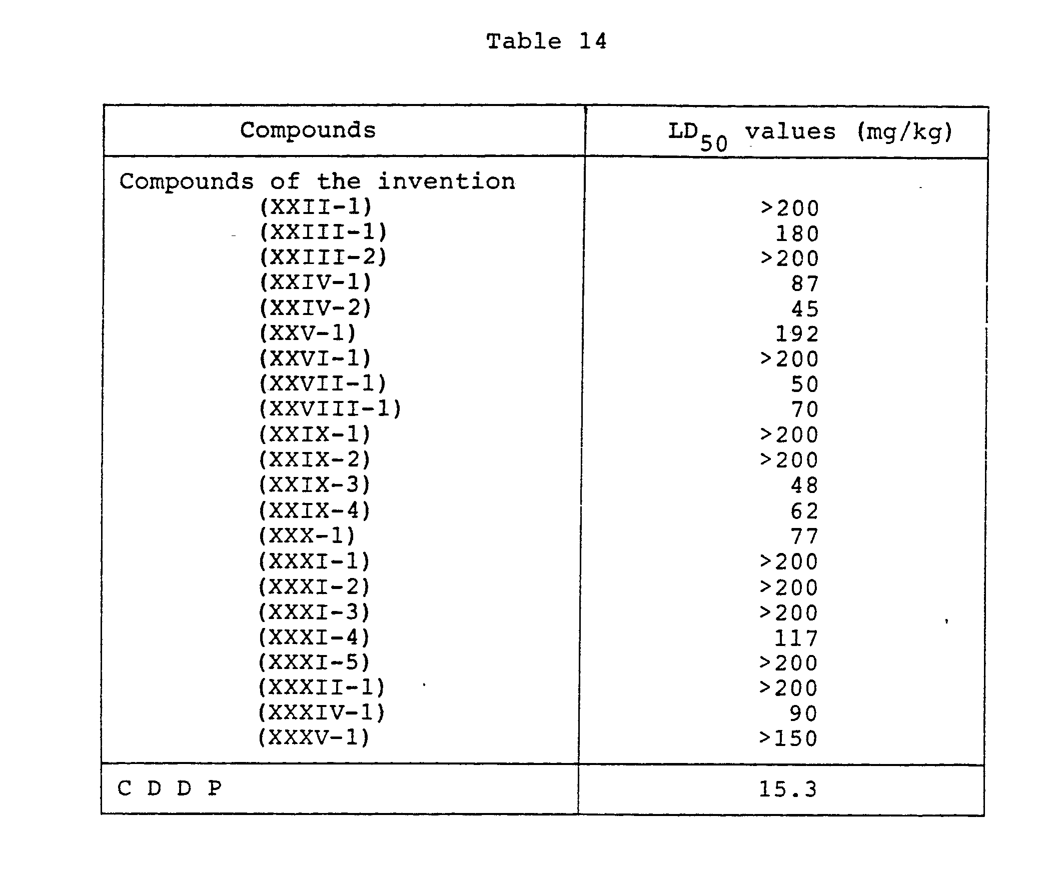

### Industrial Applicability

The compounds of the present invention are adapted to provide malignant tumor treatment agents as well as malignanat tumor treatment agent compositions satisfying both conditions of a strong antitumor activity and a weak toxicity and are, therefore, useful.

## Claims

(1) Platinum(II) complexes expressed by the following formula (I). 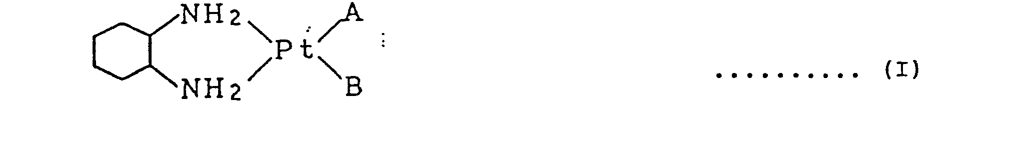
(In the formula, configuration of 1,2-diaminocyclohexane represents cis-, trans-ℓ- or trans-d-, and A and B represent respectively a ligand or OH ligand expressed by any of the following formulas (II) through (XV), and at least one of A and B is chosen from the ligands expressed by the formulas (II) through (XV).) 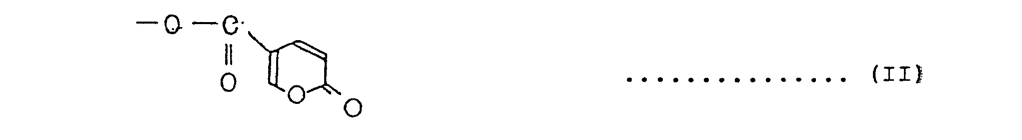 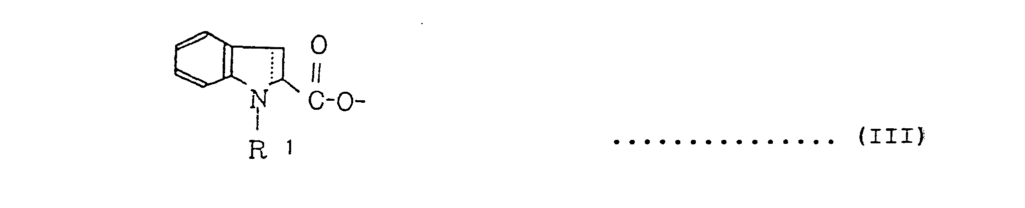
(In formula (III), R¹ represents a hydrogen atom or an acyl group, and the dotted line shows that the bond may be single or double.) 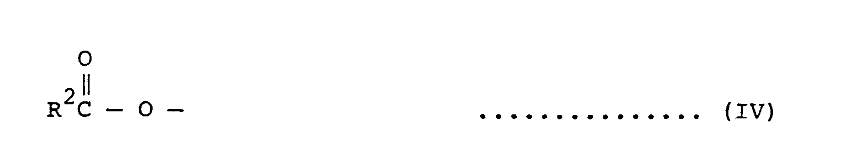
(In formula (IV), R² represents a 2-furyl or 2-tetrahydrofuryl group.) 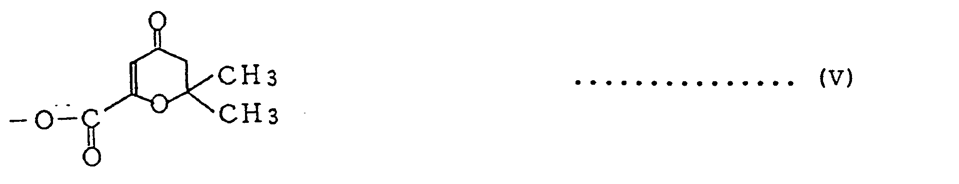 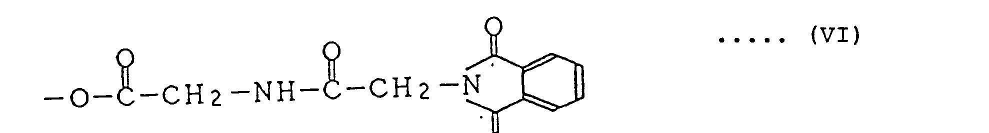 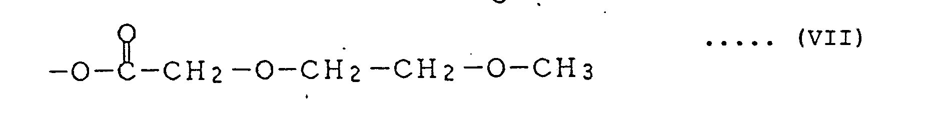 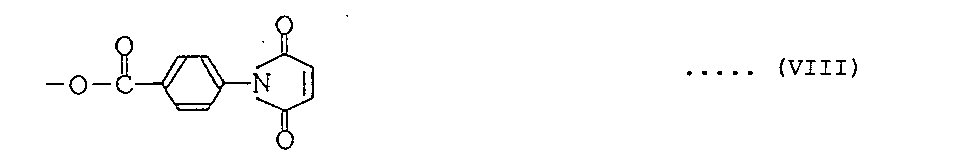 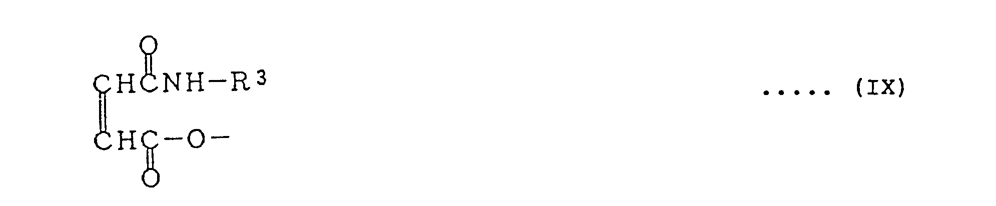
(In formula (XI)., R³ represents -CH₂CO₂R⁴, 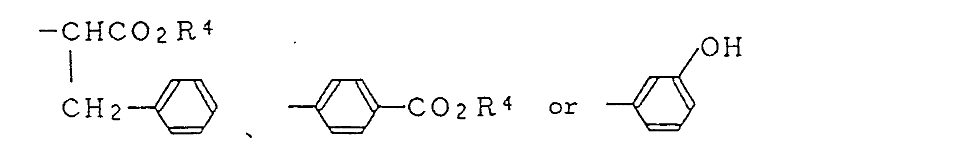
_{R}⁴ representing an alkyl group of 1-4 carbon atoms.) 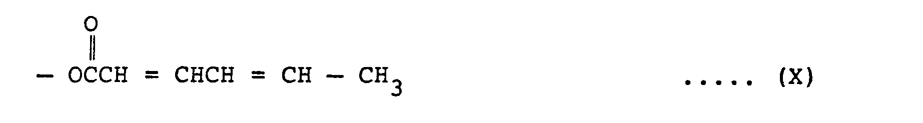 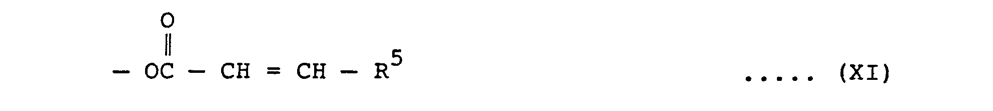
(In formula (XI); R⁵ represents

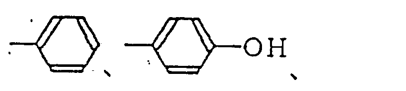

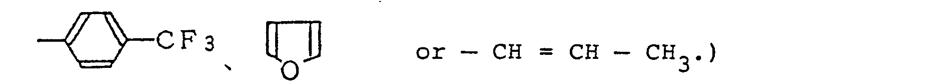

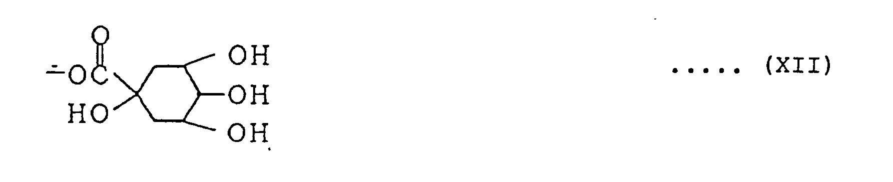

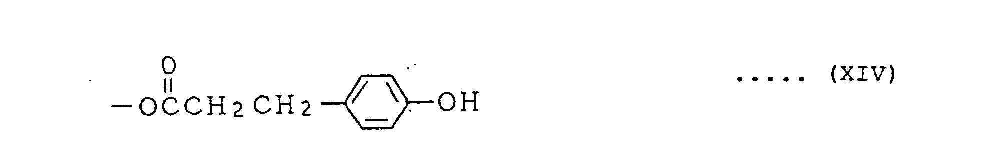

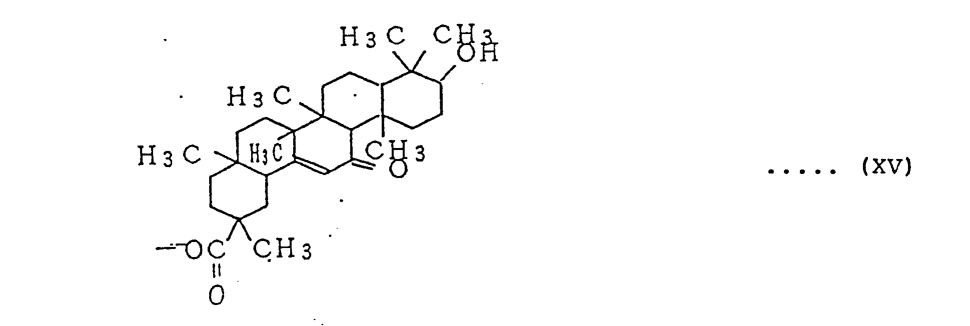

(2) A maliganant tumor treatment agent with a complex expressed by formula (1) in Claim (I) as an effective component.

(3) A malignant tumor treatment agent composition comprising an effective amount of a complex expressed by formula (I) in Claim (1) and amedically allowable excipient.
